# EUROPEAN PATENT APPLICATION

(11) **EP 2 725 698 A1**
(43) Date of publication of application: **30.04.2014**
(21) Application number: 12803035.0
(22) Date of filing: 13.06.2012
(51) Int. Cl.: H02M 7/12, H02M 3/155

(54) **BOOST-TYPE AC/DC CONVERTER**

(30) Priority: 21.06.2011 JP 2011137878
(71) Applicant: Panasonic Corporation, Osaka 571-8501 (JP)
(72) Inventor: TAMAOKA, Shuji, c/o Panasonic Corporation, 2-1-61 Shiromi, Chuo-ku Osaka 540-6207 (JP)
(74) Representative: Vigand, Philippe
(86) International application number: PCT/JP2012/003859
(87) International publication number: WO 2012/176403

(57) **Abstract**

A buck-boost AC/DC converter includes switching elements (206 to 209) that perform full-wave rectification of an AC signal thereby generating a full-wave rectified signal and perform a buck operation, switching elements (212, 213) for performing a boost operation, a reactor (11), and a control unit (200) that causes the switching elements (206 to 209) or switching elements (212, 213) to selectively perform the buck operation or the boost operation based on PWM operation, to maintain a DC voltage (Vdc) at a constant value. The switching elements (206 to 209, 212, 213) possess FET characteristics, inverse FET characteristics and inverse conductive characteristics. The control unit (200) is further configured to switch a gate-source voltage to be supplied to the switching elements (206 to 209) according to a polarity of the AC signal, thereby causing the switching elements (206 to 209) to perform full-wave rectification.

## Description

### [Technical Field]

The present invention relates to a high input power factor and high efficiency buck-boost AC/DC converter that rectifies an inputted AC voltage and outputs a desired DC voltage.

### [Background Art]

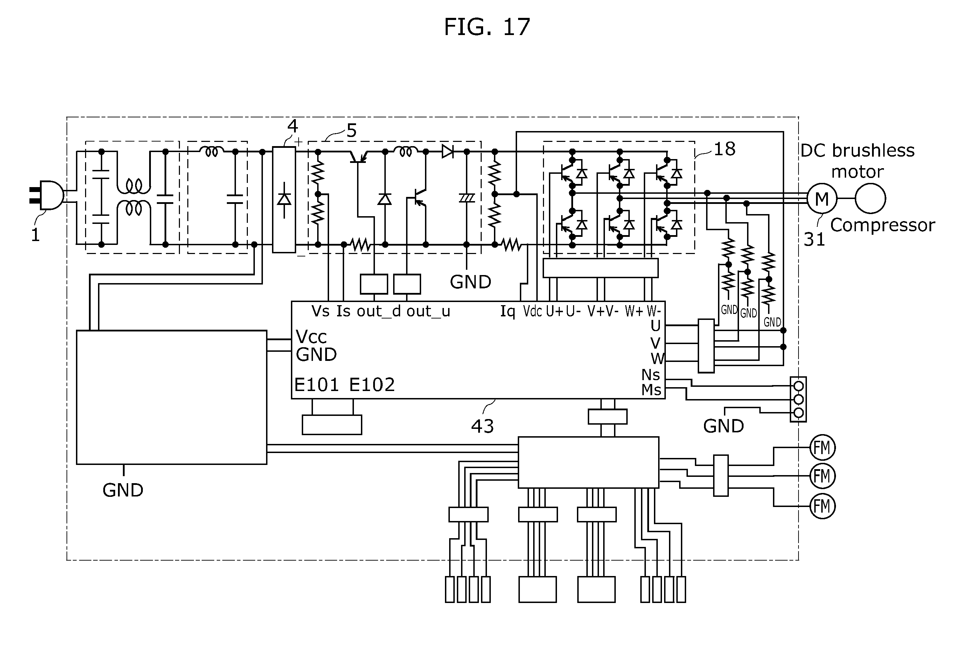

FIG. 17 is a circuit block diagram of a DC brushless motor driver unit according to Patent Literature (PTL) 1. The DC brushless motor driver unit performs power factor correction of an AC power from a commercial power source 1, which is the input signal to the driver unit, by using a full-wave rectifier diode bridge 4, a converter 5, and a converter control circuit incorporated in a control circuit 43. In other words, the driver unit includes a power factor correction (PFC) converter that provides a high input power factor and in which the AC waveform of the commercial power source 1 is similar in shape to a full-wave rectified input voltage waveform.

The key point of the DC brushless motor driver unit is, in addition to the high input power factor, that the converter 5 is capable of setting a DC voltage Vdc of an inverter to a desired value by buck-boost conversion operation, irrespective of the AC voltage of the commercial power source 1 which is the input signal to the driver unit. With the mentioned function, the inverter 18 can drive the DC brushless motor 31 with a lowest possible DC voltage Vdc to constantly maximize the modulation rate when performing pulse width modulation (PWM). Accordingly, the driver unit can suppress the switching loss of the inverter, and also reduce pulsating current components of the motor driving current. Thus, the driver unit can reduce the core loss of the motor.

### [Citation List]

### [Patent Literature]

[PTL 1] Japanese Unexamined Patent Application Publication No.2003-143890

### [Summary of Invention]

### [Technical Problem]

However, existing buck-boost AC/DC converters (buck-boost PFC converters) employ a diode for a return current. Because of a minor carrier accumulation effect in the diode, a recovery current is generated. Therefore, the AC/DC converter has to drive not only the current flowing in a reactor but also the recovery current of the diode when a switching element is turned on, when performing the buck or boost conversion operation.

Here, the recovery current of the diode is larger than the current flowing in the reactor. In addition, when the switching element drives the recovery current, the collector/emitter voltage Vce or drain/source voltage Vds of the switching element becomes larger. Therefore, a switching loss, corresponding to the time integrated value of the product of the voltage Vce or voltage Vds and the collector current or drain current of the switching element, becomes a large value.

Accordingly, the present invention provides a buck-boost AC/DC converter capable of suppressing a switching loss.

### [Solution to Problem]

In an aspect, the present invention provides a buck-boost AC/DC converter that converts an AC signal to a DC signal and maintains a voltage of the DC signal at a constant value, the buck-boost AC/DC converter including a first input terminal and a second input terminal to which the AC signal is inputted; an output terminal from which the DC signal is outputted; a first switching element group that generates a full-wave rectified signal by full-wave rectification of the AC signal and performs a buck operation, the first switching element group being connected to the first and second input terminals; a second switching element group that performs a boost operation, the second switching element group being connected to the output terminal; a reactor connected between the first switching element group and the second switching element group; a smoothing capacitor connected to the output terminal; a control unit configured to selectively cause one of first and second switching element groups to perform one of the buck operation and the boost operation based on pulse width modulation (PWM), to thereby maintain the voltage of the DC signal at a constant value. Each of switching elements included in the first and second switching element groups includes a gate terminal, a drain terminal, and a source terminal; allows a current to flow from the drain terminal to the source terminal or from the source terminal to the drain terminal depending on a polarity of a voltage difference between the drain terminal and the source terminal, when a gate-source voltage being a voltage of the gate terminal with respect to a voltage of the source terminal is higher than a threshold voltage; cuts off the current from the drain terminal to the source terminal when the gate-source voltage is lower than or equal to the threshold voltage; and allows the current to flow from the source terminal to the drain terminal when the gate-source voltage is lower than or equal to the threshold voltage, and a voltage of the gate terminal with respect to a voltage of the drain terminal is higher than the threshold voltage, and the control unit is further configured to cause the first switching element group to perform the full-wave rectification, by changing the gate-source voltage to be supplied to the switching element included in the first switching element group depending on a polarity of the AC signal.

With the foregoing configuration, the switching element serves as a diode as a substitutes therefor, and therefore the buck-boost AC/DC converter can be realized without employing a diode. Accordingly, the buck-boost AC/DC converter according to the embodiment can suppress the switching loss originating from the recovery current of the diode. Therefore, the buck-boost AC/DC converter is capable of increasing the PWM switching frequency and reducing the size of the reactor, as well as the size of heat dissipating components such as a heat sink, and thus achieves reduction in overall size and higher efficiency.

In the foregoing buck-boost AC/DC converter, the first switching element group may include a first switching element having a drain terminal connected to the first input terminal and a source terminal connected to a first node; a second switching element and a third switching element connected between the first input terminal and a second node, and having respective source terminals or respective drain terminals connected in series to each other; a fourth switching element having a drain terminal connected to the second input terminal and a source terminal connected to the first node; and a fifth switching element and a sixth switching element connected between the second input terminal and the second node, and having respective source terminals or respective drain terminals connected in series to each other.

In the foregoing buck-boost AC/DC converter, the respective drain terminals of the second switching element and the third switching element may be connected to each other, and both of the drain terminals may be unified. The respective drain terminals of the fifth switching element and the sixth switching element may be connected to each other, and both of the drain terminals may be unified.

The mentioned configuration allows the second and the third switching element, and also the fifth and the sixth switching element to be made smaller in size.

In the foregoing buck-boost AC/DC converter, the reactor may be connected between the second node and a third node, and the second switching element group may include a seventh switching element having a source terminal connected to the first node and a drain terminal connected to the third node; and an eighth switching element having a source terminal connected to the third node and a drain terminal connected to the output terminal.

In the foregoing buck-boost AC/DC converter, the reactor may be connected between the first node and a third node, and the second switching element group may include a seventh switching element having a source terminal connected to the third node and a drain terminal connected to the second node; and an eighth switching element having a source terminal connected to the second node and a drain terminal connected to the output terminal.

In the foregoing buck-boost AC/DC converter, in the buck operation the control unit may be configured to (i) perform a switching control including making the gate-source voltage of one of two switching elements higher than the threshold voltage and making the gate-source voltage of the other lower than or equal to the threshold voltage; and sequentially changing the switching element the gate-source voltage of which is to be made higher than the threshold voltage, the two switching elements being one of the second and third switching elements and one of the fifth and sixth switching elements, and (ii) make the gate-source voltage of the other of the second and third switching elements, the other of the fifth and sixth switching elements, and the eighth switching element higher than the threshold voltage, and make the gate-source voltage of the seventh switching element lower than or equal to the threshold voltage.

In the foregoing buck-boost AC/DC converter, the source terminal of the second switching element may be connected to the first input terminal, the source terminal of the third switching element may be connected to the second node, and the control unit may be configured to (i) make the gate-source voltage of the first switching element lower than or equal to the threshold voltage and make the gate-source voltage of the second, the fourth, and the sixth switching element higher than the threshold voltage, and perform the switching control on the third and fifth switching elements, when a voltage of the first input terminal is positive and a voltage of the second input terminal is negative, and (ii) make the gate-source voltage of the fourth switching element lower than or equal to the threshold voltage and make the gate-source voltage of the first, the third, and the fifth switching element higher than the threshold voltage, and perform the switching control on the second and sixth switching elements, when a voltage of the first input terminal is negative and a voltage of the second input terminal is positive.

In the foregoing buck-boost AC/DC converter, in the boost operation the control unit may be configured to (i) perform a switching control including making the gate-source voltage of one of the seventh and eighth switching elements higher than the threshold voltage; making the gate-source voltage of the other lower than or equal to the threshold voltage; and sequentially changing the switching element the gate-source voltage of which is to be made higher than the threshold voltage, (ii) make the gate-source voltage of the first, the fifth, and the sixth switching element lower than or equal to the threshold voltage and make the gate-source voltage of the second, the third, and the fourth switching element higher than the threshold voltage, when the voltage of the first input terminal is positive and the voltage of the second input terminal is negative, and (iii) make the gate-source voltage of the second, the third, and the fourth switching element lower than or equal to the threshold voltage and make the gate-source voltage of the first, the fifth, and the sixth switching element higher than the threshold voltage, when the voltage of the first input terminal is negative and the voltage of the second input terminal is positive.

In the foregoing buck-boost AC/DC converter, the first switching element group may include a first switching element having a source terminal connected to a first node and a drain terminal connected to the first input terminal; a second switching element having a source terminal connected to the first input terminal and a drain terminal connected to a second node; a third switching element having a source terminal connected to the first node and a drain terminal connected to the second input terminal; a fourth switching element having a source terminal connected to the second input terminal and a drain terminal connected to the second node; a fifth switching element having a source terminal connected to the first node and a drain terminal connected to a third node; and a sixth switching element having a source terminal connected to the third node and a drain terminal connected to the second node.

In the foregoing buck-boost AC/DC converter, the reactor may be connected between the third node and a fourth node, and the second switching element group may include a seventh switching element having a source terminal connected to the first node and a drain terminal connected to the fourth node; and an eighth switching element having a source terminal connected to the fourth node and a drain terminal connected to the output terminal.

In the foregoing buck-boost AC/DC converter, the reactor may be connected between the first node and a fourth node, and the second switching element group may include a seventh switching element having a source terminal connected to the fourth node and a drain terminal connected to the third node; and an eighth switching element having a source terminal connected to the third node and a drain terminal connected to the output terminal.

In the foregoing buck-boost AC/DC converter, in the buck operation the control unit may be configured to make the gate-source voltage of the seventh switching element lower than or equal to the threshold voltage; make the gate-source voltage of the eighth switching element higher than the threshold voltage; and perform a switching control including (i) making the gate-source voltage of one of two switching elements higher than the threshold voltage and making the gate-source voltage of the other lower than or equal to the threshold voltage, and (ii) sequentially changing the switching element the gate-source voltage of which is to be made higher than the threshold voltage, the two switching elements being the fifth and sixth switching elements. In the boost operation, the control unit may be configured to make the gate-source voltage of the fifth switching element lower than or equal to the threshold voltage; make the gate-source voltage of the sixth switching element higher than the threshold voltage; and perform the switching control on the seventh and eighth switching elements.

In the foregoing buck-boost AC/DC converter, the control unit may be configured to make the gate-source voltage of the first and fourth switching elements lower than or equal to the threshold voltage and make the gate-source voltage of the second and the third switching element higher than the threshold voltage, when a voltage of the first input terminal is positive and a voltage of the second input terminal is negative; and make the gate-source voltage of the second and the third switching element lower than or equal to the threshold voltage and make the gate-source voltage of the first and fourth switching elements higher than the threshold voltage, when the voltage of the first input terminal is negative and the voltage of the second input terminal is positive.

In the foregoing buck-boost AC/DC converter, the switching element included in the first and second switching element groups may be a heterojunction field effect transistor including a gallium nitride semiconductor, and may include a semiconductor stacked body including a nitride semiconductor formed on a semiconductor substrate; a drain electrode and a source electrode formed on the semiconductor stacked body with a spacing therebetween; and a gate electrode formed between the drain electrode and the source electrode.

The mentioned configuration minimizes the minor carrier accumulation effect of the switching element. Therefore, the buck-boost AC/DC converter according to the embodiment further suppresses the switching loss originating from the recovery current.

The present invention may be realized not only as the foregoing buck-boost AC/DC converter, but also as a control method of the buck-boost AC/DC converter including distinctive procedures performed by the buck-boost AC/DC converter, or a program that causes a computer to execute the distinctive procedures. As a matter of course, such a program may be distributed through a non-transitory computer-readable recording medium such as CD-ROM, or a communication medium such as the Internet.

Further, the present invention may be realized as a semiconductor large-scale integrated circuit (LSI) that performs a part or the whole of the functions of the buck-boost AC/DC converter.

### [Advantageous Effects of Invention]

Thus, the buck-boost AC/DC converter according to one or more embodiments is capable of suppressing the switching loss.

### [Brief Description of Drawings]

[FIG. 1]

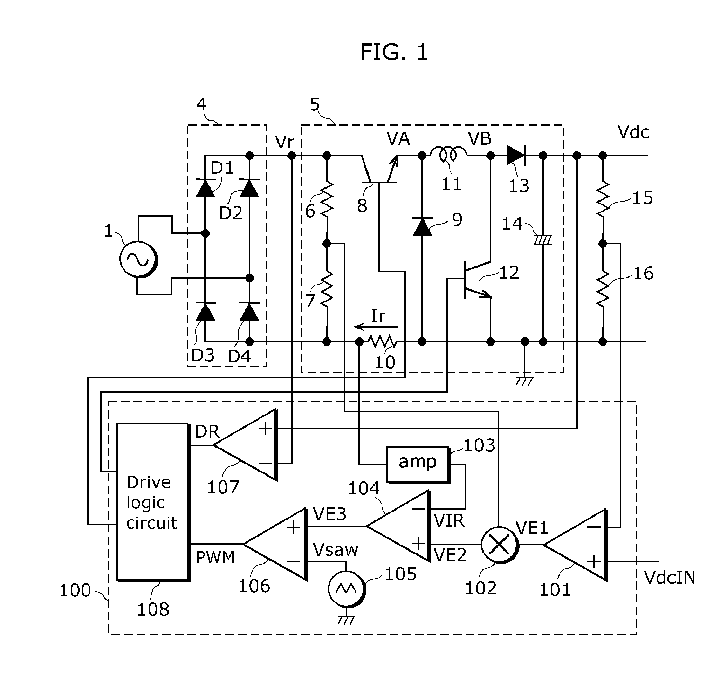

   FIG. 1 is a circuit diagram showing a configuration of a buck-boost PFC converter according to a comparative example of an exemplary embodiment.
[FIG. 2A]

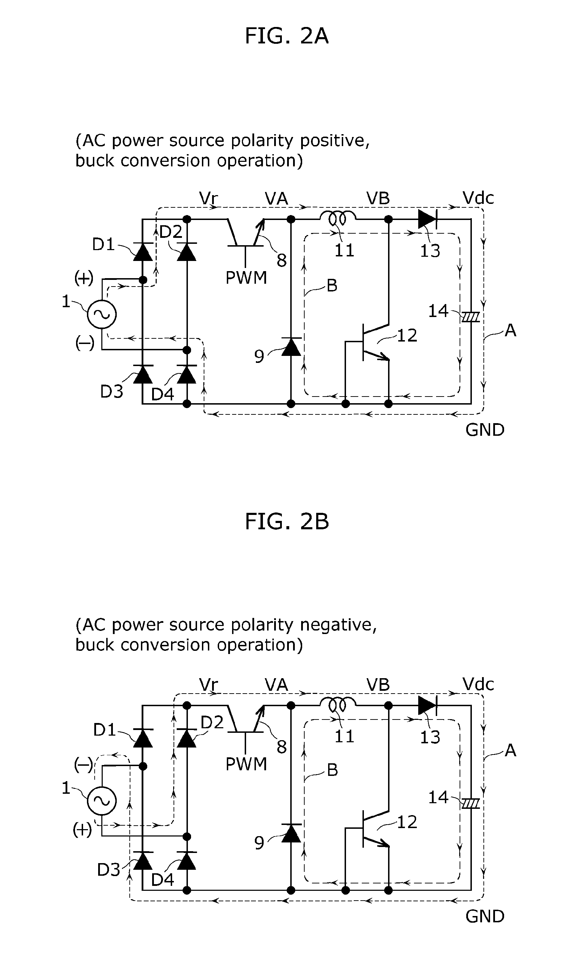

   FIG. 2A is a circuit diagram showing a buck conversion operation performed by the buck-boost PFC converter according to the comparative example of the exemplary embodiment.
[FIG. 2B]
   FIG. 2B is a circuit diagram showing another buck conversion operation performed by the buck-boost PFC converter according to the comparative example of the exemplary embodiment.
[FIG. 2C]

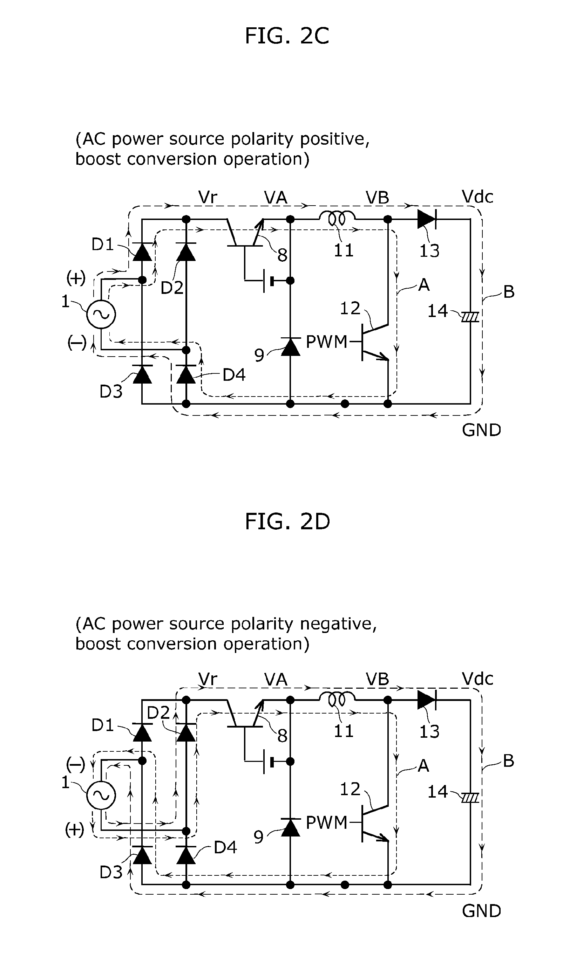

   FIG. 2C is a circuit diagram showing a boost conversion operation performed by the buck-boost PFC converter according to the comparative example of the exemplary embodiment.
[FIG. 2D]
   FIG. 2D is a circuit diagram showing another boost conversion operation performed by the buck-boost PFC converter according to the comparative example of the exemplary embodiment.
[FIG. 3A]

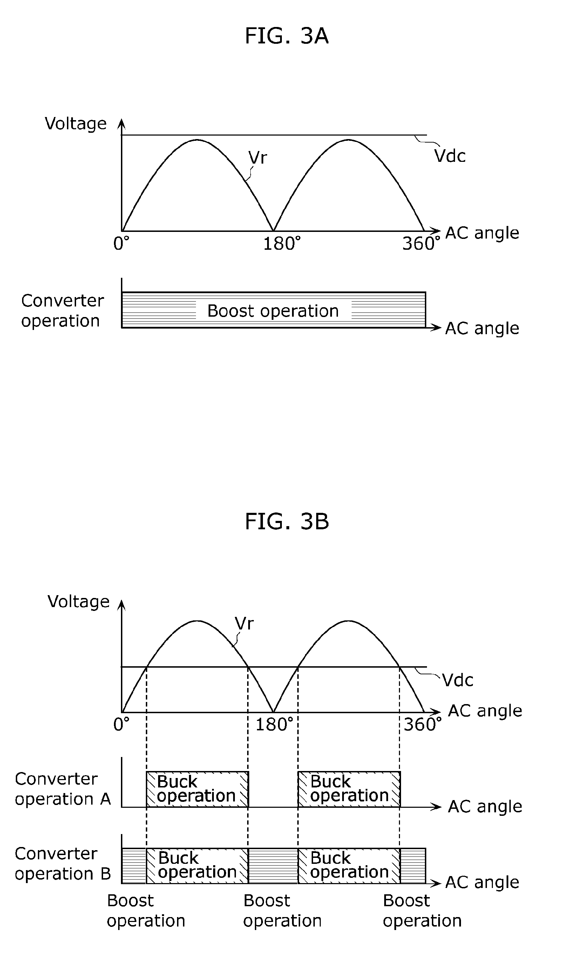

   FIG. 3A is a diagram showing an operation of the buck-boost PFC converter according to the comparative example of the exemplary embodiment.
[FIG. 3B]
   FIG. 3B is a diagram showing another operation of the buck-boost PFC converter according to the comparative example of the exemplary embodiment.
[FIG. 4A]

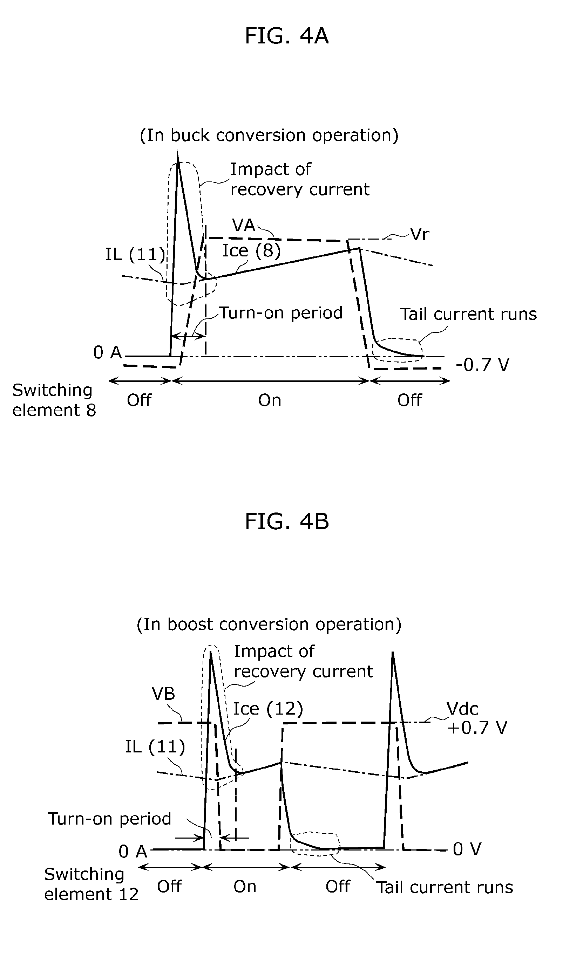

   FIG. 4A is a diagram showing a switching waveform of the buck-boost PFC converter according to the comparative example of the exemplary embodiment.
[FIG. 4B]
   FIG. 4B is a diagram showing another switching waveform of the buck-boost PFC converter according to the comparative example of the exemplary embodiment.
[FIG. 5]

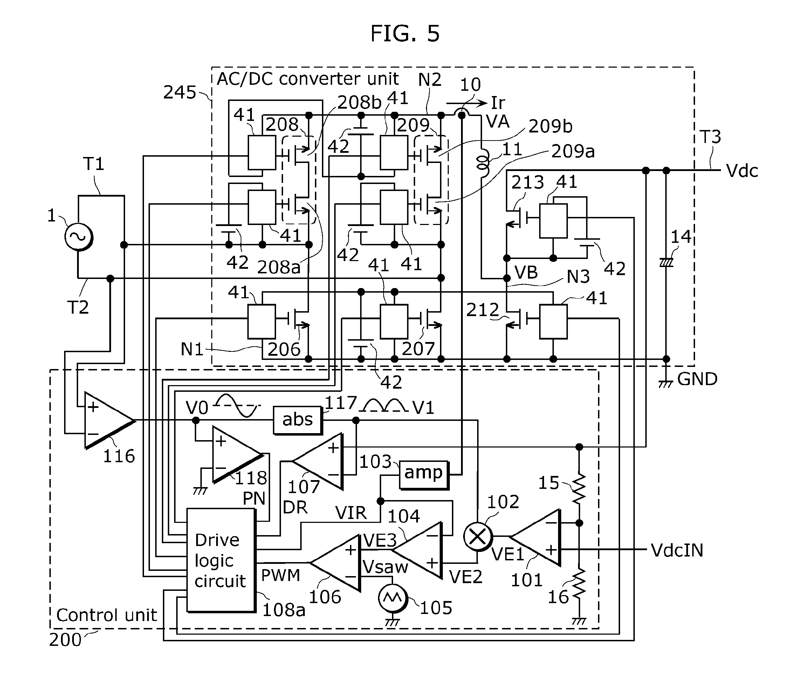

   FIG. 5 is a circuit diagram showing a configuration of a buck-boost PFC converter according to a first embodiment.
[FIG. 6A]

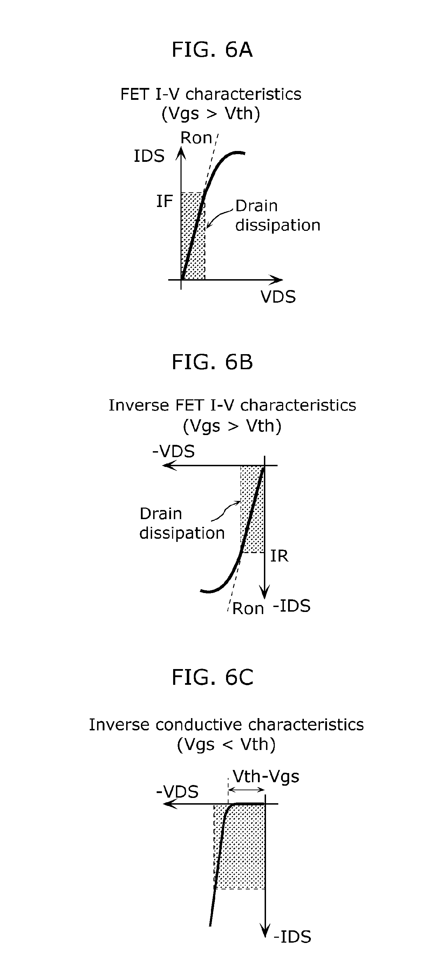

   FIG. 6A is a graph showing FET characteristics of a bidirectional switching element according to the first embodiment.
[FIG. 6B]
   FIG. 6B is a graph showing inverse FET characteristics of the bidirectional switching element according to the first embodiment.
[FIG. 6C]
   FIG. 6C is a graph showing inverse conductive characteristics of the bidirectional switching element according to the first embodiment.
[FIG. 7A]

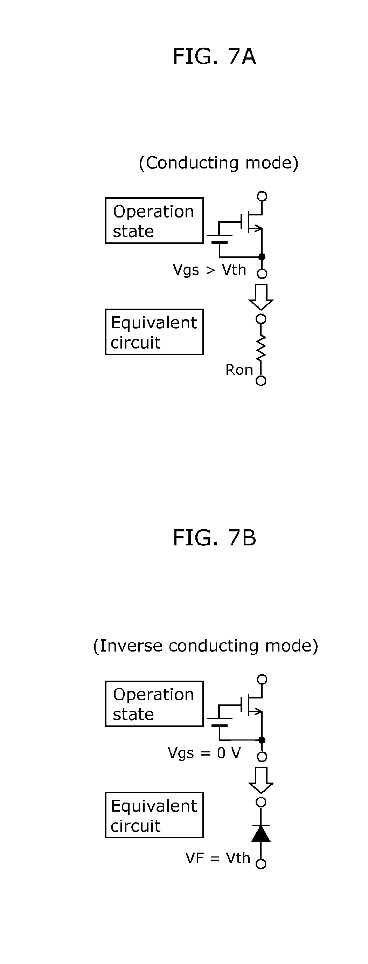

   FIG. 7A is a diagram showing an operation state and an equivalent circuit of the bidirectional switching element according to the first embodiment.
[FIG. 7B]
   FIG. 7B is another diagram showing an operation state and an equivalent circuit of the bidirectional switching element according to the first embodiment.
[FIG. 8]

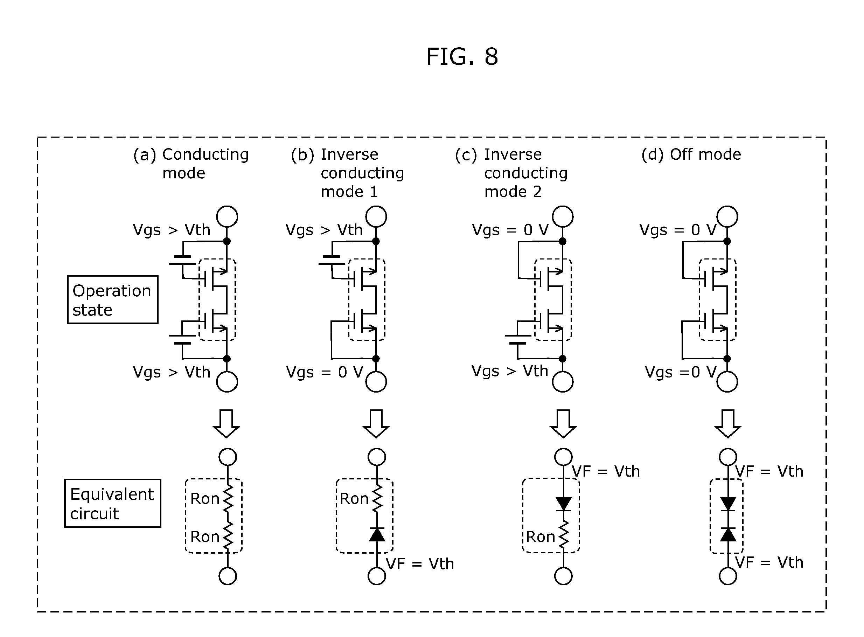

   FIG. 8 is a diagram showing an operation state and an equivalent circuit of the bidirectional switching element with two gate terminals according to the first embodiment.
[FIG. 9A]

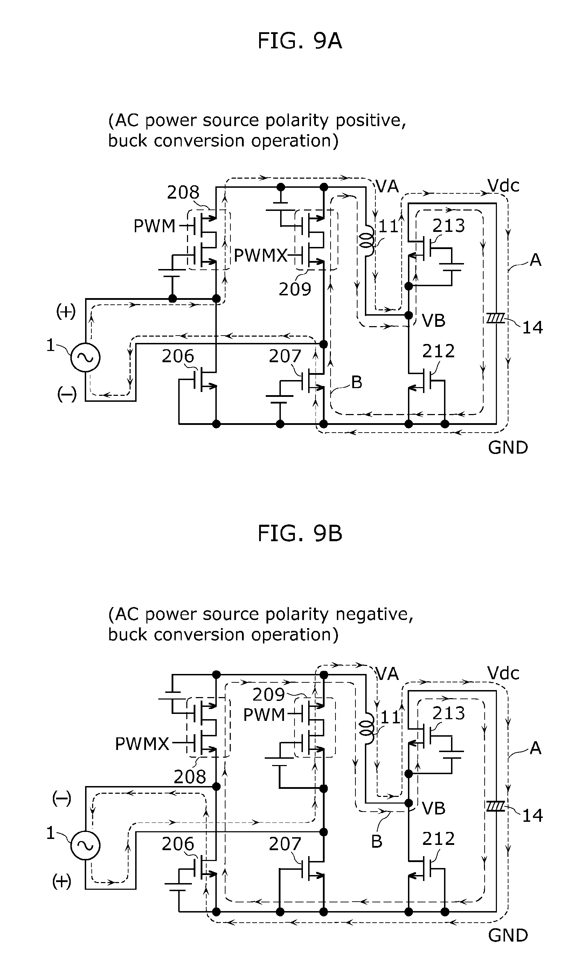

   FIG. 9A is a circuit diagram showing a buck conversion operation performed by the buck-boost PFC converter according to the first embodiment.
[FIG. 9B]
   FIG. 9B is a circuit diagram showing another buck conversion operation performed by the buck-boost PFC converter according to the first embodiment.
[FIG. 9C]

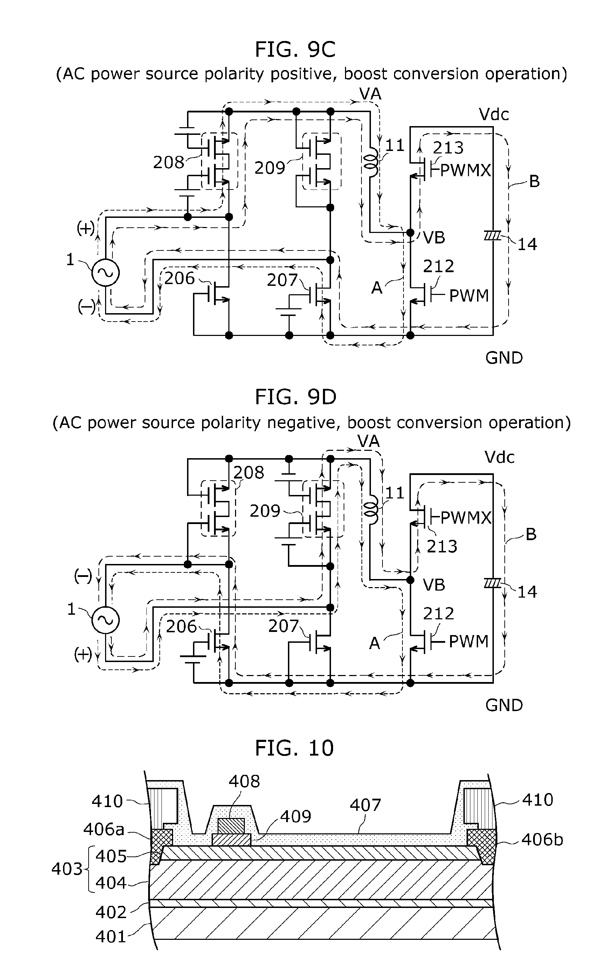

   FIG. 9C is a circuit diagram showing a boost conversion operation performed by the buck-boost PFC converter according to the first embodiment.
[FIG. 9D]
   FIG. 9D is a circuit diagram showing another boost conversion operation performed by the buck-boost PFC converter according to the first embodiment.
[FIG. 10]
   FIG. 10 is a cross-sectional view of the bidirectional switching element according to the first embodiment.
[FIG. 11]

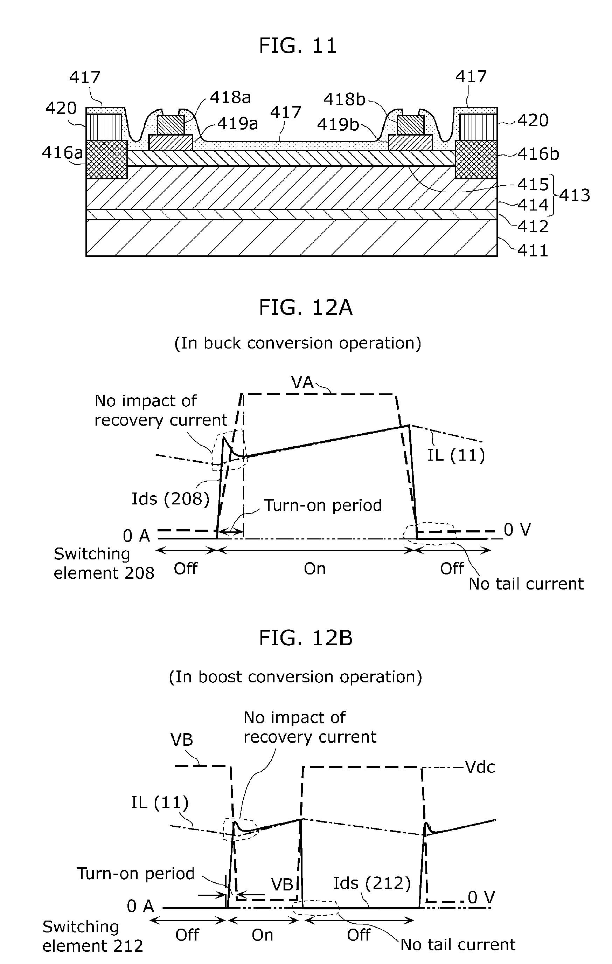

   FIG. 11 is a cross-sectional view of the switching element with two gate terminals according to the first embodiment.
[FIG. 12A]
   FIG. 12A is a diagram showing a switching waveform of the buck-boost PFC converter according to the first embodiment.
[FIG. 12B]
   FIG. 12B is a diagram showing another switching waveform of the buck-boost PFC converter according to the first embodiment.
[FIG. 13]

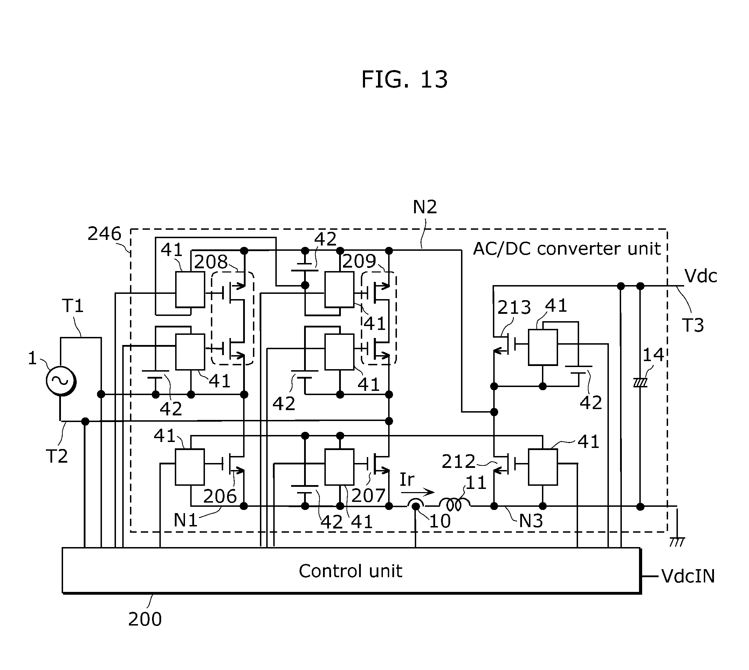

   FIG. 13 is a circuit diagram showing a configuration of a buck-boost PFC converter according to a variation of the first embodiment.
[FIG. 14]

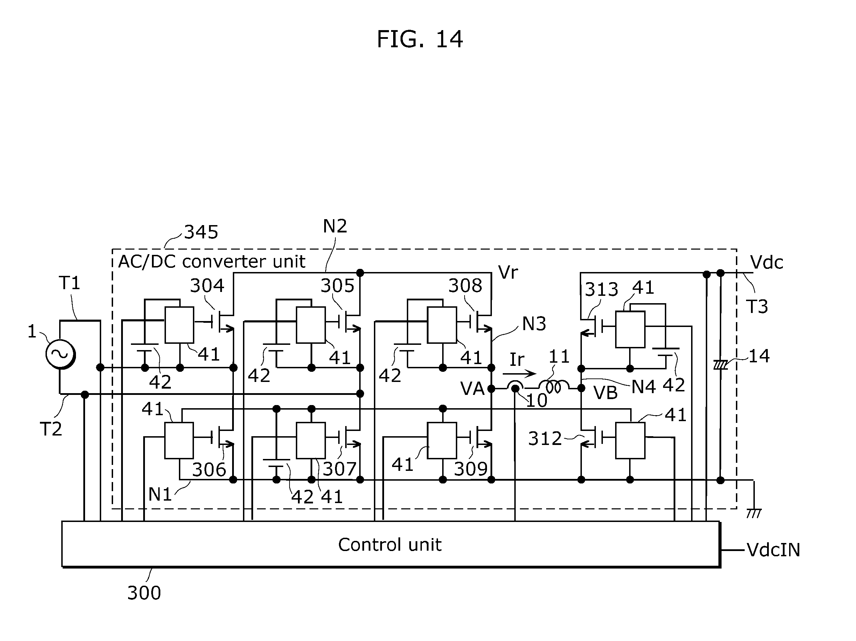

   FIG. 14 is a circuit diagram showing a configuration of a buck-boost PFC converter according to a second embodiment.
[FIG. 15A]

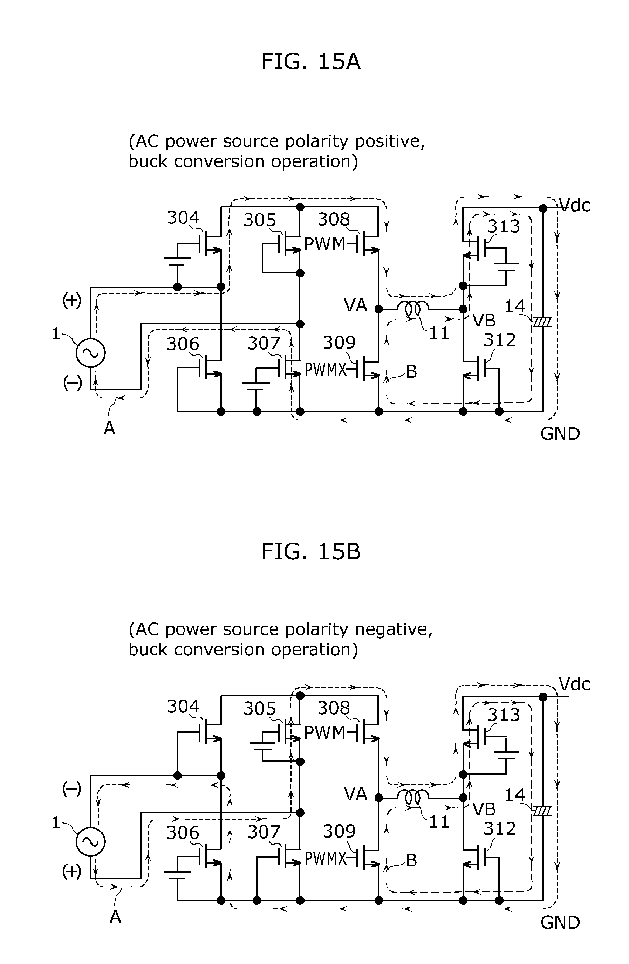

   FIG. 15A is a circuit diagram showing a buck conversion operation performed by the buck-boost PFC converter according to the second embodiment.
[FIG. 15B]
   FIG. 15B is a circuit diagram showing another buck conversion operation performed by the buck-boost PFC converter according to the second embodiment.
[FIG. 15C]

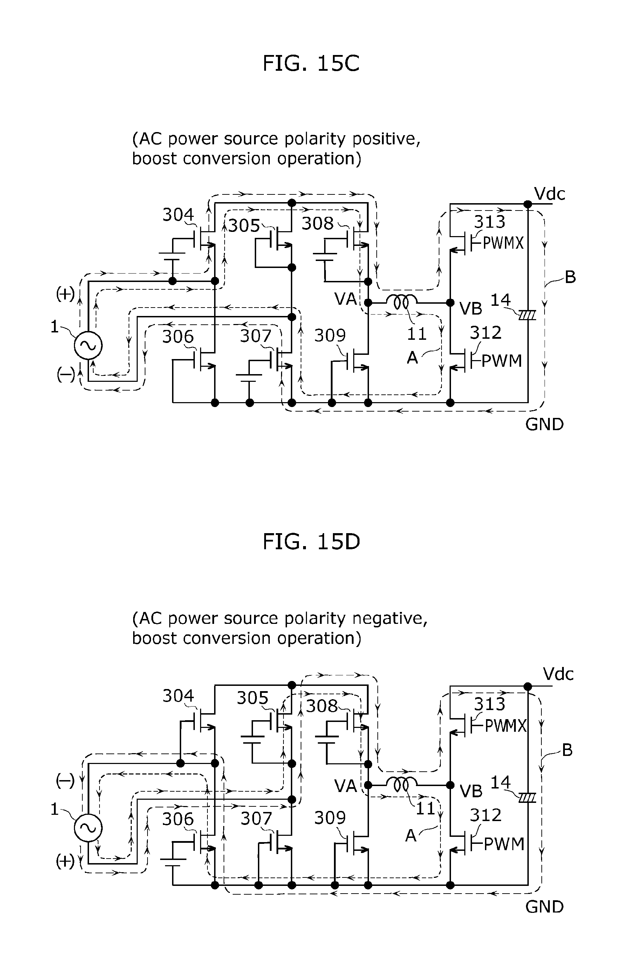

   FIG. 15C is a circuit diagram showing a boost conversion operation performed by the buck-boost PFC converter according to the second embodiment.
[FIG. 15D]
   FIG. 15D is a circuit diagram showing another boost conversion operation performed by the buck-boost PFC converter according to the second embodiment.
[FIG. 16]

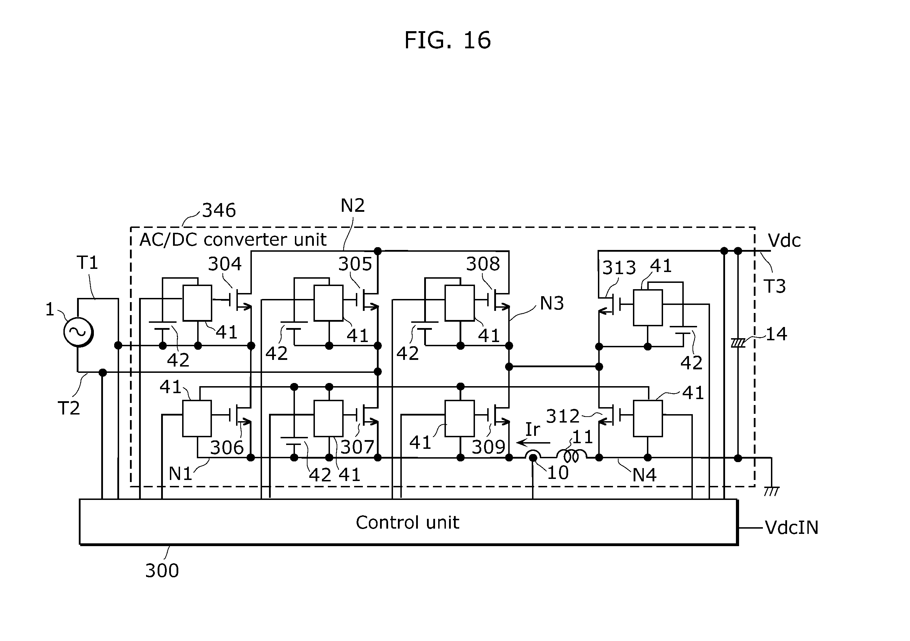

   FIG. 16 is a circuit diagram showing a configuration of a buck-boost PFC converter according to a variation of the second embodiment.
[FIG. 17]
   FIG. 17 is a circuit diagram showing a configuration of a conventional buck-boost PFC converter.

### [Description of Embodiments]

### [Embodiment 1]

Hereafter, certain exemplary embodiments of the buck-boost PFC converter will be described in details with reference to the accompanying drawings. It is to be noted that the present invention is not limited to the specific configurations described in the exemplary embodiments below, but includes configurations based on technical ideas equivalent to technical ideas described in the exemplary embodiments and common technical knowledge in this field. The numerical values, shapes, materials, constituents, the arrangement and connection of the constituents, steps, the processing order of the steps etc. shown in the following embodiments are mere examples, and therefore do not limit the scope of the Claims. Thus, among the constituents in the embodiments below, the constituents that are not described in the independent claims that indicate the broadest concept of the present invention are described as arbitrary constituents.

### Comparative Example

Before proceeding to the embodiments, a buck-boost PFC converter according to a comparative example of the embodiment will be described.

FIG. 1 is a circuit diagram showing a configuration of a converter 5 shown in FIG. 17 and a control unit 100 that controls the operation of the converter 5. A PFC operation and a buck-boost conversion operation will be described hereunder.

First, the PFC operation will be described.

A first error amplifier 101 generates an error signal VE1, which is a difference between a DC voltage Vdc detected by voltage dividing resistors 15 and 16 for DC voltage detecting and a target voltage VdcIN for controlling the DC voltage Vdc to a constant value.

A multiplication circuit 102 multiplies the error signal VE1 by a full-wave rectified voltage Vr generated by voltage dividing resistors 6 and 7 for detecting the full-wave rectified voltage, thereby generating a current control signal VE2. Here, the full-wave rectified voltage Vr is obtained by full-wave rectification of an AC voltage of a commercial power source 1 performed by a rectifier diode bridge 4.

An amplifier 103 amplifies an output current Ir of the rectifier diode bridge 4 detected by a current sensor 10, which is a resistor for detecting a full-wave rectified current, thereby generating a voltage signal VIR.

A second error amplifier 104 compares between the current control signal VE2 and the voltage signal VIR, thereby generating a PFC error signal VE3.

A PWM comparator 106 generates a signal PWM from the PFC error signal VE3 and a triangular wave signal Vsaw generated by a triangular wave generation circuit 105. The signal PWM is used for causing either a buck chopper semiconductor switching element 8 or a boost chopper semiconductor switching element 12 to perform a PWM switching operation.

By the PWM switching operation performed by one of the buck chopper semiconductor switching element 8 and the boost chopper semiconductor switching element 12, the voltage signal VIR amplified from the output current Ir of the rectifier diode bridge 4 and the current control signal VE2 are controlled to be approximately equal.

The current control signal VE2 is obtained by multiplying the error signal VE1 by the full-wave rectified voltage Vr. The waveform of the current control signal VE2 is generally similar in shape to that of the full-wave rectified voltage Vr. Accordingly, the output current Ir of the rectifier diode bridge 4 is similar in shape to the full-wave rectified voltage Vr. This means that the current from the commercial power source 1 inputted to a converter 5 through the rectifier diode bridge 4 is in phase with the AC voltage of the commercial power source 1. As a result, the rectifier diode bridge 4 and the converter 5 constitute a PFC converter that provides an input power factor as high as approximately 1.

When a DC gain of the first error amplifier 101 (gain in a low frequency range) is sufficiently high as in a proportional integration (PI) control, the DC voltage Vdc outputted from the converter 5 is a value obtained by multiplying the target voltage VdcIN by the reciprocal of the division ratio of the voltage dividing resistors 15 and 16 for DC voltage detection. Therefore, the DC voltage Vdc can be controlled by adjusting the target voltage VdcIN.

Hereunder, a buck-boost conversion operation will be described.

One of the switching element 8 which is the buck chopper semiconductor switching element, and the switching element 12 which is the boost chopper semiconductor switching element, performs the PWM switching operation based on the signal PWM generated by the PWM comparator 106, according to the relation between the full-wave rectified voltage Vr and the DC voltage Vdc.

Therefore, the DC voltage Vdc is controlled to a constant value according to the target voltage VdcIN, irrespective of whether the full-wave rectified voltage Vr is higher or lower than the DC voltage Vdc. The buck-boost conversion operation can thus be performed. For this operation, a first comparator 107 included in a control unit 100 compares between the full-wave rectified voltage Vr and the DC voltage Vdc, thereby generating a direction signal DR. A drive logic circuit 108 causes either the buck chopper switching element 8 or the boost chopper semiconductor switching element 12 to perform the PWM switching operation using the signal PWM, on the basis of a logical value of the direction signal DR (High or Low-level), thus to execute the buck-boost conversion operation.

Referring now to FIGS. 2A to 2D, description will be given hereunder on how the power elements, i.e., the rectifier diode bridge 4 and the converter 5 operate to perform the buck conversion operation (or buck operation) and the boost conversion operation (or boost operation).

FIGS. 2A to 2D illustrate the commercial power source 1 which is a single-phase AC power source, diodes D1 to D4 included in the rectifier diode bridge 4, the switching elements 8 and 12 which are power elements constituting the main circuit of the converter 5, diodes 9 and 13 for return current, a reactor 11, and a smoothing capacitor 14.

In FIG. 2A, two broken lines A and B indicate the current flow produced by PWM switching in the buck conversion operation when the polarity of the commercial power source 1 (or AC power source polarity) is positive. The broken lines A indicate the current flowing through the reactor 11 when the switching element 8 is on. The broken lines B indicate the current flowing through the reactor 11 when the switching element 8 is off.

Likewise, FIG. 2B illustrates the current flowing through the reactor 11 in the buck conversion operation when the polarity of the commercial power source 1 is negative. The broken lines A and B indicate the same flows as in FIG. 2A.

In contrast, two broken lines A and B in FIG. 2C indicate the current flow produced by PWM switching of the switching element 12 in the boost conversion operation when the polarity of the commercial power source 1 is positive. In this operation, the current flows as indicated by the broken lines A and B, owing to the energy stored in the reactor 11. The broken lines A indicate the current flowing through the reactor 11 when the switching element 12 is on. The broken lines B indicate the current flowing through the reactor 11 when the switching element 12 is off.

Likewise, FIG. 2D illustrates the current flowing through the reactor 11 in the boost conversion operation when the polarity of the commercial power source 1 is negative. The broken lines A and B indicate the same flows as in FIG. 2C.

Whether the converter 5 performs the buck conversion operation or the boost conversion operation depends on the magnitude relation between the full-wave rectified voltage Vr and the DC voltage Vdc.

The mentioned point will be described referring to FIGS. 3A and 3B. As shown therein, the full-wave rectified voltage Vr is obtained through full-wave rectification of the AC voltage of the commercial power source 1, and not a constant voltage. On the other hand, the DC voltage Vdc is a constant voltage determined according to the target voltage VdcIN.

As shown in FIG. 3A, when the peak voltage of the full-wave rectified voltage Vr is lower than the DC voltage Vdc, the converter 5 performs the boost operation. In contrast, when the peak voltage of the full-wave rectified voltage Vr is higher than the DC voltage Vdc the converter 5 basically performs the buck conversion operation, as shown in FIG. 3B. However, since the full-wave rectified voltage Vr has a voltage waveform that has undergone the full-wave rectification, the full-wave rectified voltage Vr is not always higher than the DC voltage Vdc, which is a fixed voltage, over the whole range of the AC electric angle ("AC angle" in FIGS. 3A and 3B). Accordingly, two methods of conversion operation may be adopted as shown in FIG. 3B. In each case, the following points have to be taken in account.

A first method is represented by converter operation A in FIG. 3B. In the converter operation A, the converter 5 performs the buck operation only in the AC angle range where Vr is higher than Vdc, and suspends the conversion operation in the AC angle range where Vr is lower than Vdc.

A second method is represented by converter operation B in FIG. 3B. In the converter operation B, the converter 5 performs the buck operation in the AC angle range where Vr is higher than Vdc, but performs the boost operation in the AC angle range where Vr is lower than Vdc.

The first method is simple to perform, however since the conversion operation is suspended in the AC angle range where Vr is lower than Vdc, the AC angle range of the current inputted from the commercial power source 1 becomes narrower. This leads to a compromise in input power factor of the converter 5.

The second method is more complicated, however since the current is supplied from the commercial power source 1 even in the range where Vr is lower than Vdc, and therefore the input power factor of the converter 5 remains unchanged.

It is to be noted that the circuit block diagram shown in FIG. 1 is based on the second method.

Referring again to FIGS. 2A to 2D, the buck-boost operation of the converter 5 will be described.

First, the buck operation performed when the full-wave rectified voltage Vr is higher than the DC voltage Vdc will be described. The buck operation performed when the polarity of the commercial power source 1 is positive is shown in FIG. 2A, and the buck operation performed when the polarity of the commercial power source 1 is negative is shown in FIG. 2B. As is apparent from the current flow indicated by the broken lines A and B in FIGS. 2A and 2B, the difference between the positive and negative polarities is absorbed by the rectifier diode bridge 4 that includes four diodes D1 to D4. Accordingly, the operation of the converter 5, located posterior to the rectifier diode bridge 4, does not depend on whether the polarity of the AC signal is positive or negative. For this reason, only FIG. 2A will be referred to for the description of the buck conversion operation.

In the buck conversion operation, the switching element 8 performs the PWM switching operation, while the switching element 12 is constantly off. When the switching element 8 is on, the current flows, as indicated by the broken lines A, from the positive terminal of the commercial power source 1 to the negative terminal thereof, through the rectifier diode bridge 4, the switching element 8, the reactor 11, the diode 13, the smoothing capacitor 14, and the rectifier diode bridge 4 in this order.

When the switching element 8 is off, the current flows as indicated by the broken lines B, owing to the energy stored in the reactor 11 by the current that flowed when the switching element 12 was on as indicated by the broken lines A. More specifically, a return current flows through the diode 9, the reactor 11, the diode 13, and the smoothing capacitor 14 in this order, and again to the diode 9.

FIG. 4A shows a switching waveform of a voltage VA at the node between the switching element 8 and the reactor 11 in the PWM switching operation.

The High-level value of the voltage VA when the switching element 8 is on is Vr. The Low-level value of the voltage VA when the switching element 8 is off is determined by a forward voltage VF of the diode 9, which is approximately -0.7 V. The DC voltage Vdc in the buck operation is determined when the energy stored in the reactor 11 by the current indicated by the broken lines A when the switching element 8 is on, and the energy emitted from the reactor 11 by the circulating current indicated by the broken lines B flowing through the diode 9 when the switching element 8 is off, become equal to each other. Consequently, the DC voltage Vdc is the average of the High-level and Low-level values of the voltage VA.

Now, the boost operation performed when the full-wave rectified voltage Vr is lower than the DC voltage Vdc will be described.

The boost operation performed when the polarity of the commercial power source 1 is positive is shown in FIG. 2C, and the boost operation performed when the polarity of the commercial power source 1 is negative is shown in FIG. 2D. As in the buck operation, the operation of the converter 5 does not depend on whether the polarity is positive or negative. Therefore, only FIG. 2C will be referred to for the description of the boost conversion operation.

In the boost conversion operation, the switching element 12 performs the PWM switching operation, while the switching element 8 is constantly on in order to connect the rectifier diode bridge 4 and the reactor 11. When the switching element 12 is on, the current flows, as indicated by the broken lines A, from the commercial power source 1 through the rectifier diode bridge 4, the switching element 8, the reactor 11, the switching element 12, and the rectifier diode bridge 4 in this order, and then to the commercial power source 1.

When the switching element 12 is off, the current flows as indicated by the broken lines B, owing to the energy stored in the reactor 11 by the current that flowed when the switching element 12 was on as indicated by the broken lines A. More specifically, the return current flows from the rectifier diode bridge 4 through the switching element 8, the reactor 11, the diode 13, and the smoothing capacitor 14 in this order, and again to the rectifier diode bridge 4.

FIG. 4B shows a switching waveform of a voltage VB at the node between the switching element 12 and the reactor 11 in the PWM switching operation.

The High-level value of the voltage VB when the switching element 12 is on is approximately Vdc + 0.7V. This 0.7 V is an approximate value to the forward voltage VF of the diode 13. The Low-level value of the voltage VB when the switching element 12 is off is approximately 0 V. The DC voltage Vdc in the boost operation is determined when the energy stored in the reactor 11 by the current indicated by the broken lines A when the switching element 12 is on, and the energy emitted from the reactor 11 by the circulating current indicated by the broken lines B flowing through the diode 13 when the switching element 12 is off, become equal to each other. Consequently, the DC voltage Vdc is determined depending on the period of the on state in a PWM switching operation cycle of the switching element 12, i.e., the on duty.

As described above, the rectifier diode bridge 4 and the converter 5 shown in FIG. 1 perform the buck conversion or boost conversion operation depending on the magnitude relation between the full-wave rectified voltage Vr of the commercial power source 1 and the DC voltage Vdc, according to the PWM switching operation of the switching elements 8 and 12 controlled by the control unit 100. The rectifier diode bridge 4 and the converter 5 also serve as a high input power factor PFC converter, operating with the single reactor 11 and the single smoothing capacitor 14. Further, the buck-boost PFC converter is capable of performing both of the buck conversion and the boost conversion, and hence provides higher efficiency than a converter including a boost converter and a buck converter that are connected in series.

However, the buck-boost PFC converter shown in FIG. 1 has the following drawback.

In the diodes 9 and 13 for return current in the converter 5, a recovery current is generated owing to a minor carrier accumulation effect in the diodes.

Accordingly, in the buck conversion operation the switching element 8 has to drive not only the current flowing in the reactor 11 but also the recovery current in the diode 9, when the switching element 8 turns on, as shown in FIG. 4A.

In addition, in the boost conversion operation shown in FIG. 4B, the switching element 12 receives not only the current that flows in the reactor 11 but also the recovery current of the diode 13, when the switching element 8 turns on.

Here, the recovery current of the diodes 9 and 13 is considerably larger than the current flowing in the reactor 11. In addition, when the switching elements drive the recovery current, a collector/emitter voltage Vce or a drain/source voltage Vds of the switching elements is increased. Therefore, a switching loss, corresponding to the time integrated value of the product of the voltage Vce or voltage Vds and the collector current or drain current of the switching element, becomes a large value.

Further, the voltage Vce or the voltage Vds of the switching element 8 in the buck conversion operation has a waveform which is a vertical inversion of the waveform of the voltage VA shown in FIG. 4A. The value obtained by time integration through a turn-on period shown in FIG. 4A with respect to the product of the waveform and the collector current or drain current Ice (8) of the switching element 8 corresponds to the switching loss incurred when the switching element 8 turns on. As may be understood from FIG. 4A, since the switching element 8 has to drive the recovery current of the diode 9, the switching loss in the turn-on period becomes a large value.

In addition, the voltage Vce or the voltage Vds of the switching element 12 in the boost conversion operation has the same waveform as that of the voltage VB shown in FIG. 4B. The value obtained by time integration through a turn-on period shown in FIG. 4B with respect to the product of the waveform and the collector current or drain current Ice (12) of the switching element 12 corresponds to the switching loss incurred when the switching element 12 turns on. As may be understood from FIG. 4B, since the switching element 12 has to drive the recovery current of the diode 13, the switching loss in the turn-on period becomes a large value.

A major part of the switching loss derives from the recovery current of the diode which is unnecessary for the buck conversion operation and the boost conversion operation. Accordingly, the efficiency of the converter 5 is largely affected unless the loss from the recovery current is suppressed. The power consumption of the converter 5 for the switching operation is the product of the foregoing switching loss and the PWM switching frequency of the converter 5. To reduce the value of the reactor 11 in the converter 5, it is necessary to increase the PWM switching frequency. However, increasing the PWM switching frequency leads to an increase in power consumption of the converter 5 for the switching operation, owing to the switching loss at the switching elements 8 and 12. Therefore, the efficiency of the converter 5 is degraded, and reduction in size of the converter 5 by making the reactor 11 smaller is unable to achieve. Consequently, the buck-boost PFC converter according to the comparative example is unpractical from the viewpoints of efficiency and reduction in size of the converter 5.

Accordingly, exemplary embodiments described hereunder provide a high efficiency buck-boost PFC converter that yet provides a high power factor. The diode for the return current is excluded from the buck-boost PFC converter according to the following embodiments. The following embodiments also provide a smaller-sized buck-boost PFC converter that provides both a high power factor and higher efficiency and without employing the return current diode, utilizing the benefits of newly developed power switching elements such as a heterojunction field effect transistor that employs a nitride semiconductor.

### First Embodiment

A first embodiment of the buck-boost PFC converter will now be described.

FIG. 5 is a circuit diagram showing a configuration of the buck-boost PFC converter according to the first embodiment. The buck-boost PFC converter according to the first embodiment will be described hereunder referring to FIG. 5.

The buck-boost PFC converter shown in FIG. 5 corresponds to the buck-boost AC/DC converter in the present invention, and is configured to convert an AC signal to a DC signal (DC voltage Vdc) and control the voltage of the DC signal to a constant value. The buck-boost PFC converter includes an AC/DC converter unit 245 and a control unit 200. The buck-boost PFC converter also includes first input terminal T1 and T2 to which an AC signal is inputted, and an output terminal T3 from which a DC voltage Vdc is outputted.

The control unit 200 is configured in generally the same manner as the control unit 100 of the buck-boost PFC converter according to the comparative example shown in FIG. 1, but partially modified according to the configuration of the AC/DC converter unit 245.

The control unit 200 further includes a differential amplifier 116, an absolute value circuit 117, and a second comparator 118, in addition to the configuration of the control unit 100.

The differential amplifier 116 detects the AC signal of the commercial power source 1 thereby generating an AC voltage signal V0. The absolute value circuit 117 converts the positive and negative AC voltage signal V0 outputted from the differential amplifier 116 into a full-wave rectified signal V1 representing only the full-wave rectified positive voltage. The second comparator 118 detects the polarity of the AC signal of the commercial power source 1, from the AC voltage signal V0 outputted from the differential amplifier 116.

In addition, the function of a drive logic circuit 108a in the control unit 200 is different from that of the drive logic circuit 108 in the comparative example. Such functional difference is a result of excluding the rectifier diode bridge 4 and the diodes 9 and 13 for the return current, from the buck-boost PFC converter according to the comparative example.

The operation of the control unit 200 for controlling the PFC converter will be described hereunder, with additional explanation of the difference as well as the functions of the control unit 100 in the comparative example, which is already described above. The description of the AC/DC converter unit 245 will follow thereafter.

The first error amplifier 101 generates the error signal VE1 representing the difference between the DC voltage Vdc outputted from the AC/DC converter unit 245 and the target voltage VdcIN for controlling the DC voltage Vdc to a constant value.

The multiplication circuit 102 multiplies the error signal VE1 by the full-wave rectified signal V1 outputted from the absolute value circuit 117, thereby generating a current control signal VE2.

The amplifier 103 amplifies an output current Ir of the commercial power source 1 detected by a current sensor 10 in the AC/DC converter unit 245, thereby generating a voltage signal VIR.

The second error amplifier 104 compares between the current control signal VE2 and the voltage signal VIR, thereby generating the PFC error signal VE3.

The triangular wave generation circuit 105 generates the triangular wave signal Vsaw.

The PWM comparator 106 generates the signal PWM from the PFC error signal VE3 and the triangular wave signal Vsaw. The signal PWM is used for causing either a pair of bidirectional switching elements 208 and 209 with two gate terminals or a pair of bidirectional switching elements 212 and 213 in the AC/DC converter unit 245 to perform the PWM switching operation. The signal PWM is inputted to the drive logic circuit 108a.

The second comparator 118 identifies the positive or negative polarity of the AC voltage signal V0 and generates a polarity signal PN indicating the result, and outputs the generated polarity signal PN to the drive logic circuit 108a.

The first comparator 107 compares between the full-wave rectified signal V1 and the DC voltage Vdc outputted from the AC/DC converter unit 245 and generates the direction signal DR indicating the magnitude comparison result, and outputs the generated direction signal DR to the drive logic circuit 108a.

The drive logic circuit 108a outputs the PWM switching signal PWM and a complementary signal PWMX for synchronous rectification to either pair of the switching elements 208, 209 and the switching elements 212, 213 according to the polarity signal PN and the direction signal DR. The complementary signal PWMX has the polarity inverted from the signal PWM and a High-level period not overlapping that of the signal PWM. The flow of these signals will be subsequently described.

The drive logic circuit 108a also turns the signal PWMX to the Low-level when the voltage signal VIR is approximately zero. This point will also be described later.

The voltage signal VIR and the current control signal VE2 are controlled to be approximately equal by the PWM switching operation performed by either pair of bidirectional switching elements, namely the switching elements 208, 209 and the switching elements 212, 213. The current control signal VE2 is obtained by multiplying the error signal VE1 by the full-wave rectified signal V1. The waveform of the current control signal VE2 is generally similar to that of the full-wave rectified signal V1. Therefore, the output current Ir is similar in shape to the full-wave rectified signal V1.

The above means that the output current Ir that has passed the bidirectional switching element 208 or 209 is in phase with the AC voltage of the commercial power source 1. Thus, the control unit 200 allows the AC/DC converter unit 245 to operate as a PFC converter that provides an input power factor as high as approximately 1, by controlling the AC/DC converter unit 245 as described above.

When a DC gain of the first error amplifier 101 (gain in a low frequency range) is sufficiently high as in a proportional integration (PI) control, the DC voltage Vdc is a value obtained by multiplying the target voltage VdcIN by the reciprocal of the division ratio of the voltage dividing resistors 15 and 16 for DC voltage detection. Therefore, the DC voltage Vdc can be controlled by adjusting the target voltage VdcIN.

Hereunder, the buck-boost conversion operation performed by the AC/DC converter unit 245 will be described.

The AC/DC converter unit 245 includes, in place of the Si-based semiconductor switching elements 8, 12 and the diodes 9, 13 in the comparative example, four bidirectional switching elements 206, 207, 212, and 213 having characteristic described below, the pair of bidirectional switching elements 208 and 209 with two gate terminals and each including two bidirectional switching elements connected in series to each other in opposite directions, eight pre-drive circuits 41 that drive the gate terminals of those bidirectional switching elements, five power sources 42 for the pre-drive circuits 41, and one each of the reactor 11 and the smoothing capacitor 14. The current sensor 10 in the AC/DC converter unit 245 shown in FIG. 5 is utilized when the control unit 200 controls the PWM switching operation.

To be more detailed, the switching element 206 (first switching element) has the drain terminal connected to the first input terminal T1, and the source terminal connected to the first node (GND).

The switching element 208 includes switching elements 208a and 208b (second and third switching element) connected in series to each other via the respective drain terminals, and connected between the first input terminal T1 and the second node. In other words, the source terminal of the switching element 208a is connected to the first input terminal T1, and the source terminal of the switching element 208b is connected to the second node. Here, the switching element 208a and 208b may be connected in series via the respective source terminals.

The switching element 207 (fourth switching element) has the drain terminal connected to the second input terminal T1, and the source terminal connected to the first node.

The switching element 209 includes switching elements 209a and 209b (fifth and sixth switching element) connected in series to each other via the respective drain terminals, and connected between the second input terminal T1 and the second node. In other words, the source terminal of the switching element 209a is connected to the second input terminal T1, and the source terminal of the switching element 209b is connected to the second node. Here, the switching element 209a and 209b may be connected in series via the respective source terminals.

The switching elements 206 to 209 correspond to the first switching element group in the present invention. The first switching element group is connected to the first input terminal T1 and T2, and serves to perform the full-wave rectification of the AC signal inputted to the first input terminal T1 and T2 thereby generating the full-wave rectified signal, and the buck operation.

The switching element 212 (seventh switching element) has the source terminal connected to the first node, and the drain terminal connected to the third node. The switching element 213 (eighth switching element) has the source terminal connected to the third node, and the drain terminal connected to the output terminal T3.

The switching elements 212 and 213 correspond to the second switching element group in the present invention. The second switching element group is connected to the output terminal T3, and serves to perform the boost operation.

The reactor 11 is connected between the first switching element group and the second switching element group. More specifically, the reactor 11 is connected between the second node and the third node.

The smoothing capacitor 14 is connected to the output terminal T3.

The control unit 200 causes one of the first and second switching element groups to selectively perform one of the buck operation and the boost operation by pulse width modulation (PWM), to thereby control the DC voltage Vdc to a constant value. In addition, the control unit 100 switches the gate-source voltage to be supplied to the switching elements in the first switching element group according to the polarity of the AC signal, thereby causing the first switching element group to perform the full-wave rectification.

The bidirectional switching elements will now be described in details.

The bidirectional switching elements 206, 207, 208a, 208b, 209a, 209b, 212, and 213 possess I-V characteristics shown in FIGS. 6A, 6B, and 6C. The I-V characteristics will be described hereunder.

The bidirectional switching elements each include the gate terminal for controlling the current and the drain terminal and source terminal for receiving and outputting the current. The voltage at the gate terminal, the drain terminal, and the source terminal will hereafter be referred to as gate voltage, drain voltage, and source voltage, respectively. The bidirectional switching elements possess FET characteristics and inverse FET characteristics. The FET characteristics and the inverse FET characteristics enable the bidirectional switching element to supply a current IDS from the drain terminal to the source terminal or from the source terminal to the drain terminal according to the polarity of the voltage VDS, when the gate-source voltage Vgs is higher than a threshold voltage Vth. Here, the voltage Vgs represents a voltage difference of the gate voltage with respect to the source voltage. The voltage VDS represents the voltage difference of the drain voltage with respect to the source voltage.

FIGS. 6A and 6B illustrate the characteristics of the current IDS and the voltage VDS that appear when the voltage Vgs is higher than the threshold voltage Vth, i.e., when the bidirectional switching element is on for supplying the current between the drain terminal and the source terminal. Here, FIGS. 6A and 6B are called I-V characteristics chart. The current IDS is defined as positive when flowing from the drain terminal to the source terminal.

The I-V characteristics include a triode region and a saturation region, like I-V characteristics of a MOSFET. The triode region is a region in the vicinity of zero voltage where the voltage VDS reaches a certain value from zero. The saturation region is a region where the current IDS barely varies despite the variation of the voltage VDS, and presents characteristics similar to constant current characteristics. In the triode region the I-V characteristics are linear, and the inclination of the voltage VDS with respect to the current IDS may be defined as the on-resistance Ron of the bidirectional switching element. In bidirectional switching elements the characteristics of the triode region are essential as switching characteristics, and therefore the following description will focus on the characteristics of the triode region.

FIG. 6A is the characteristics chart showing the case where the voltage VDS is positive, i.e., the drain voltage is higher than the source voltage. As is apparent from the I-V characteristics chart of FIG. 6A, the current IDS is positive. Accordingly, the current flows from the drain terminal to the source terminal. The I-V characteristics shown in FIG. 6A are called FET characteristics.

FIG. 6B is the characteristics chart showing the case where the voltage VDS is negative, i.e., the drain voltage is lower than the source voltage. As is apparent from the I-V characteristics chart of FIG. 6B, the current IDS is negative. Accordingly, the current flows from the source terminal to the drain terminal. The I-V characteristics shown in FIG. 6B are called inverse FET characteristics.

The bidirectional switching element is unable to supply the current IDS from the drain terminal to the source terminal when the voltage Vgs is lower than the threshold voltage Vth. However, in the case where the drain voltage is lower than the gate voltage and the voltage difference therebetween (Vgs-VDS) is higher than the threshold voltage Vth, the bidirectional switching element can supply the current IDS from the source terminal to the drain terminal, even though the voltage Vgs is lower than the threshold voltage Vth. Such characteristics are called inverse conductive characteristics.

FIG. 6C is an I-V characteristics chart showing the inverse conductive characteristics. As is apparent from FIG. 6C, the inverse conductive characteristics are the same as the I-V characteristics of the diode when Vgs is 0 V, i.e. when the gate terminal and the source terminal are short-circuited. In this case, the source terminal corresponds to the anode, the drain terminal to the cathode, and the threshold voltage Vth to the forward voltage VF.

As described above, the bidirectional switching element may be regarded as a resistor having a certain on-resistance Ron provided that the voltage Vgs is higher than the threshold voltage Vth, as may be understood from the FET characteristics chart shown in FIG. 6A and the inverse FET characteristics chart shown in FIG. 6B. Likewise, the bidirectional switching element may be regarded as a diode in which the anode corresponds to the source terminal and the cathode corresponds to the drain terminal when the voltage Vgs is lower than the threshold voltage Vth, as may be understood from the inverse conductive characteristics shown in FIG. 6C. The forward voltage of such a diode is (Vth-Vgs).

In this embodiment, hereafter, the operation of the AC/DC converter will be described by equivalently transforming the bidirectional switching element as follows.
(1) When the voltage Vgs is higher than the threshold voltage Vth, i.e., when the bidirectional switching element is on, the bidirectional switching element will be regarded as a resistor having an on-resistance Ron.
(2) In the off state of the bidirectional switching element, in which the gate terminal and the source terminal are short-circuited, the bidirectional switching element will be regarded as a diode in which the anode corresponds to the source terminal and the cathode corresponds to the drain terminal.

FIG. 7A illustrates (1) of the equivalent transformation rule cited above. FIG. 7B illustrates (2) of the equivalent transformation rule cited above. In FIG. 7A the bidirectional switching element is in the conduction mode, in which the current can flow bidirectionally, i.e., both upward and downward in the drawing. FIG. 7B illustrates the inverse conducting mode, in which the current does not flow downward but only flows upward in the drawing.

The foregoing equivalent transformation rules are also applicable to the bidirectional switching elements 208 and 209 with two gate terminals. Since these bidirectional switching elements have two gate terminals, the current can flow in four different modes as shown in FIG. 8.

The mode (a) in FIG. 8 is a conducting mode of the bidirectional switching element with two gate terminals. The current can flow bidirectionally, i.e., both upward and downward in the drawing.

The mode (b) in FIG. 8 is an inverse conducting mode 1 of the bidirectional switching element with two gate terminals. The current does not flow downward but only flows upward.

The mode (c) in FIG. 8 is an inverse conducting mode 2 of the bidirectional switching element with two gate terminals. The current does not flow upward but only flows downward.

The mode (d) in FIG. 8 is an off mode of the bidirectional switching element with two gate terminals. The current flows neither upward nor downward.

The eight pre-drive circuits 41 are respectively associated with the eight switching elements 206, 207, 208a, 208b, 209a, 209b, 212, and 213. The pre-drive circuits 41 each control the gate-source voltage Vgs of the corresponding switching element, under the control by the control unit 200. To be more detailed, the pre-drive circuits 41 make the gate-source voltage Vgs of the corresponding switching element higher or than the threshold voltage, or lower than or equal to the threshold voltage. In addition, the pre-drive circuits 41 shift the level of the signal from the control unit 200 for example, and provide the signal of the shifted level to between the gate and the source of the corresponding switching element.

Hereafter, raising the gate-source voltage Vgs of the switching element to a voltage higher than the threshold voltage may be expressed as supplying a High-level voltage to the switching element, or turning on the switching element. Likewise, lowering the gate-source voltage Vgs of the switching element to a voltage lower than the threshold voltage may be expressed as supplying a Low-level voltage to the switching element. In addition, the state where the High-level voltage is being supplied to the switching element (conducting mode) may be expressed as switching element being on. Likewise, the state where the Low-level voltage is being supplied to the switching element (inverse conducting mode) may be expressed as switching element being off.

Now, the operation of the buck-boost PFC converter according to this embodiment will be described hereunder.

In the buck operation, the control unit 200 performs a switching control on one of the switching elements 208a and 208b and one of the switching elements 209a and 209b, in which the control unit 200 turns on one of those two switching elements and turns off the other, and sequentially changes the switching element to be turned on. In addition, the control unit 200 turns on the other of the switching elements 208a and 208b, the other of the switching elements 209a and 209b, and the switching element 213, and turns off the switching element 212.

Further, when the voltage of the first input terminal T1 is positive and the voltage of the second input terminal T1 is negative (hereinafter expressed as "polarity of the commercial power source 1 is positive), the control unit 200 turns off the switching element 206 and turns on the switching elements 208a, 207, and 209b, and performs the mentioned switching control on the switching elements 208b and 209a.

In contrast, when the voltage of the first input terminal T1 is negative and the voltage of the second input terminal T1 is positive (hereinafter expressed as "polarity of the commercial power source 1 is negative), the control unit 200 turns off the switching element 207 and turns on the switching elements 206, 208b, and 209a, and performs the foregoing switching control on the switching elements 208a and 209b.

In the boost operation, the control unit 200 performs the foregoing switching control on the switching elements 212 and 213.

Further, when the polarity of the commercial power source 1 is positive, the control unit 200 turns off the switching elements 206, 209a, and 209b, and turns on the switching elements 207, 208a, and 208b.

In contrast, when the polarity of the commercial power source 1 is negative, the control unit 200 turns off the switching elements 207, 208a, and 208b, and turns on the switching elements 206, 209a, and 209b.

FIGS. 9A, 9B, 9C, and 9D are circuit diagrams for explaining how the buck-boost PFC converter works in the buck conversion operation and the boost conversion operation, when the polarity of the AC signal is positive and negative.

The drive logic circuit 108a in the control unit 200 shown in FIG. 5 identifies the polarity of the AC voltage signal V0 of the commercial power source 1 and decides the magnitude relation between the full-wave rectified signal V1 and the DC voltage Vdc, on the basis of the polarity signal PN from the second comparator 118 and the direction signal DR from the first comparator 107. Depending on such conditions, the drive logic circuit 108a provides the signal PWM outputted from the PWM comparator 106 and the synchronous rectification signal PWMX which is the complementary signal for the signal PWM, to either pair of the switching elements 208 and 209 or the switching elements 212 and 213.

FIG. 9A illustrates the buck conversion operation performed when the polarity of the commercial power source 1 is positive. As shown therein, the drive logic circuit 108a provides the signal PWM to the gate terminal of the switching element 208b, and the signal PWMX to the gate terminal of the switching element 209a. The drive logic circuit 108a also provides the High-level signal to the gate terminal of the switching elements 207 and 213 and the other gate terminal of the switching elements 208 and 209, and provides the Low-level signal to the gate terminal of the switching elements 206 and 212.

When the signal PWM is High-level and the signal PWMX is Low-level, the switching element 208 is in the conducting mode and the switching element 209 is in the inverse conducting mode 1. Accordingly, the current flows from the positive terminal of the commercial power source 1 to the negative output terminal thereof, through the switching element 208, the reactor 11, the switching element 213, the smoothing capacitor 14, and the switching element 207 in this order, as indicated by broken lines A in FIG. 9A. In this state, the current is flows through the reactor 11 from the commercial power source 1, and hence magnetic energy is stored in the reactor 11.

In contrast, when the signal PWM is Low-level and the signal PWMX is High-level, the switching element 209 is in the conducting mode and the switching element 208 is in the off mode. Broken lines B indicate the current flow under such a setting. The switching element 208 is in the inverse conducting mode 2 and hence magnetic energy is not stored in the reactor 11 with the current from the commercial power source 1. Conversely the reactor 11 starts to emit the magnetic energy and the current flows as indicated by broken lines B. Thus, the current flows from the reactor 11 through the switching element 213, the smoothing capacitor 14, the switching element 207, and the switching element 209 in this order, and returns to the reactor 11. With such a current flow the magnetic energy is discharged from the reactor 11.

The control unit 200 normally performs the control such that the magnetic energy stored in the reactor 11 and the magnetic energy discharged therefrom becomes equal. By such a control the buck conversion operation is realized, in which the DC voltage Vdc is controlled to a constant value lower than the AC amplitude voltage of the commercial power source 1 determined by the target voltage VdcIN, even when the voltage of the commercial power source 1 is higher than the DC voltage Vdc of the AC/DC converter unit 245.

However, the magnetic energy may not be immediately stored in the reactor 11 with the current flowing as indicated by the broken lines A though the magnetic energy in the reactor 11 is completely discharged, for example because of a delay of control response of the control unit 200. In such a case, the current flows in the reactor 11 in the direction opposite to the current indicated by the broken lines B. Accordingly, the smoothing capacitor 14 shifts to a discharge mode from a charge mode. To prevent such a phenomenon, the drive logic circuit 108a outputs the signal PWMX as a Low-level signal when the voltage signal VIR is approximately zero. This may be expressed as shifting the signal PWMX from High-level to Low-level when the current in the reactor 11 drops to approximately zero. When the signal PWMX is Low-level in FIG. 9A, the switching element 209 assumes the inverse conducting mode 1 as (b) in FIG. 8. Thus, the discharge from the smoothing capacitor 14 because of the current flowing opposite to the broken lines B in FIG. 9A can be prevented.

As described above, the drive logic circuit 108a allows the AC/DC converter unit 245 to stably operate as a buck converter, by using the polarity signal PN, the direction signal DR, and the voltage signal VIR.

FIG. 9B illustrates the buck conversion operation performed when the polarity of the commercial power source 1 is negative. As shown therein, the drive logic circuit 108a provides the signal PWM to the gate terminal of the switching element 209b, and the signal PWMX to the gate terminal of the switching element 208a. The drive logic circuit 108a also provides the High-level signal to the gate terminal of the switching elements 206 and 213 and the other gate terminal of the switching elements 208 and 209, and provides the Low-level signal to the gate terminal of the switching elements 207 and 212.

When the signal PWM is High-level and the signal PWMX is Low-level, the switching element 209 is in the conducting mode and the switching element 208 is in the inverse conducting mode 1. Accordingly, the current flows from the positive output terminal of the commercial power source 1 to the negative output terminal thereof, through the switching element 209, the reactor 11, the switching element 213, the smoothing capacitor 14, and the switching element 206 in this order, as indicated by broken lines A in FIG. 9B. With the current is flowing as indicated by broken lines A, magnetic energy is stored in the reactor 11 as described above.

In contrast, when the signal PWM is Low-level and the signal PWMX is High-level, the switching element 208 is in the conducting mode and the switching element 209 is in the inverse conducting mode 2. Broken lines B indicate the current flow under such a setting. More specifically, the circulating current flows from the reactor 11 through the switching element 213, the smoothing capacitor 14, the switching element 206, and the switching element 208 in this order, and returns to the reactor 11. With such a current the magnetic energy is discharged from the reactor 11.

The buck conversion operation performed by the control unit 200 and the protective remedy for preventing the current from flowing opposite to the broken lines B are the same as the foregoing description, which will not be repeated.

As described above, the AC/DC converter unit 245 according to this embodiment is capable of operating as a buck converter by controlling the drive logic circuit 108a, irrespective of whether the polarity of the commercial power source 1 is positive or negative.

Now, the essence of the buck conversion operation is cutting off the current supplied to the reactor 11 from the terminal outputting a positive voltage of the commercial power source 1, which is the AC power source. For this purpose, the current from the positive AC output terminal of the commercial power source 1 to the reactor 11 has to be cut off, by the inverse conducting mode 2 of the bidirectional switching elements with two gate terminals, shown in (c) in FIG. 8.

Accordingly, it is preferable to provide the two bidirectional switching elements 208 and 209 for the commercial power source 1, as shown in FIG. 5.

For the aforementioned reason, although the bidirectional switching elements 206 and 207 are capable of performing the expected function with a single gate terminal, however the bidirectional switching elements 206 and 207 may also be provided with two gate terminals, like the switching elements 208 and 209.

FIG. 9C illustrates the boost conversion operation performed when the polarity of the commercial power source 1 is positive. As shown therein, the drive logic circuit 108a provides the signal PWM to the gate terminal of the switching element 212, and the signal PWMX to the gate terminal of the switching element 213. The drive logic circuit 108a also provides the High-level signal to the gate terminal of the switching elements 207 and 208 and provides the Low-level signal to the gate terminal of the switching elements 206 and 209.

Broken lines A in FIG. 9C indicate a current flow produced when the signal PWM is High-level and the signal PWMX is Low-level. In this case, the switching element 212 is in the conducting mode and the switching element 213 is in the inverse conducting mode. Accordingly, the current indicated by the broken lines A flows from the positive output terminal of the commercial power source 1 to the negative output terminal thereof, through the switching element 208, the reactor 11, the switching element 212, and the switching element 207 in this order. With the current flowing as indicated by the broken lines A, magnetic energy is stored in the reactor 11.

In contrast, when the signal PWM is Low-level and the signal PWMX is High-level, the switching element 213 is in the conducting mode and the switching element 212 is in the inverse conducting mode. Broken lines B indicate the current flow under such a setting. The current indicated by the broken lines B flows from the positive output terminal of the commercial power source 1 through the switching element 208, the reactor 11, the switching element 213, the smoothing capacitor 14, and the switching element 207 in this order, to the negative output terminal of the commercial power source 1. With the current flowing as indicated by the broken lines B, the magnetic energy is discharged from the reactor 11 and the smoothing capacitor 14 is loaded with electric charge. Thus, the DC voltage Vdc can be boosted to a voltage higher than the AC amplitude voltage of the commercial power source 1.

The control unit 200 normally performs the control such that the magnetic energy stored in the reactor 11 and the magnetic energy discharged therefrom becomes equal. By such a control the boost conversion operation is realized, in which the DC voltage Vdc is controlled to a constant value higher than the AC amplitude voltage of the commercial power source 1 determined by the target voltage VdcIN.

However, the magnetic energy may not be immediately stored in the reactor 11 with the current flowing as indicated by the broken lines A though the magnetic energy in the reactor 11 is completely discharged, for example because a load of the DC voltage Vdc is small. In such a case, the current flows in the reactor 11 in the direction opposite to the current indicated by the broken lines B. Accordingly, the smoothing capacitor 14 shifts to a discharge mode from a charge mode. To prevent such a phenomenon, the drive logic circuit 108a outputs the signal PWMX as a Low-level signal when the voltage signal VIR is approximately zero. This may be expressed as shifting the signal PWMX from High-level to Low-level when the current in the reactor 11 drops to approximately zero. When the signal PWMX is Low-level in FIG. 9C, the switching element 213 assumes the inverse conducting mode shown in FIG. 7B. Thus, the discharge from the smoothing capacitor 14 because of the current flowing opposite to the broken lines B in FIG. 9C can be prevented.

As described above, the drive logic circuit 108a allows the AC/DC converter unit 245 to stably operate as a boost converter, by using the polarity signal PN, the direction signal DR, and the voltage signal VIR.

FIG. 9D illustrates the boost conversion operation performed when the polarity of the commercial power source 1 is negative. As shown therein, the drive logic circuit 108a provides the signal PWM to the gate terminal of the switching element 212, and the signal PWMX to the gate terminal of the switching element 213. The drive logic circuit 108a also provides the High-level signal to the gate terminal of the switching elements 206 and 209, and provides the Low-level signal to the gate terminal of the switching elements 207 and 208.

Broken lines A in FIG. 9D indicate a current flow produced when the signal PWM is High-level and the signal PWMX is Low-level. Broken lines B indicate a current flow produced when the signal PWM is Low-level and the signal PWMX is High-level. In this case, the switching element 213 is in the conducting mode and the switching element 212 is in the inverse conducting mode.

When the polarity of the commercial power source 1 is negative as shown in FIG. 9D, the boost conversion operation is performed in the same manner as in the case of FIG. 9C where the polarity of the commercial power source 1 is positive, except for the setting of the gate voltages of the switching elements 206, 207, 208, and 209. Therefore, the AC/DC converter unit 245 can stably perform as a boost converter by controlling the drive logic circuit 108a, even when the polarity of the commercial power source 1 is negative.

Thus, as is apparent from FIG. 5 and FIGS. 9A to 9D, the AC/DC converter unit 245 according to this embodiment does not include the diode for receiving the return current when the reactor 11 emits the magnetic energy. In addition, the bidirectional switching elements in the AC/DC converter unit 245 are employed on the premise that those switching elements are free from minor carrier accumulation effect, and hence suppress a recovery current and a tail current generated when the switching element turns off.

For the mentioned reason, the buck-boost PFC converter including the AC/DC converter unit 245 according to this embodiment barely suffers a switching loss originating from a recovery current from a diode formed of a Si-based semiconductor element, when performing a PWM switching operation. Therefore, the buck-boost PFC converter does not incur a significant increase in power consumption despite increasing the switching frequency. Consequently, the buck-boost PFC converter allows the boost induction coil to be made smaller by increasing the switching frequency.

Here, examples of the bidirectional switching elements free from the minor carrier accumulation effect include a GaN transistor, which will be described below. The bidirectional switching element includes a semiconductor stacked body composed of a nitride semiconductor formed on a semiconductor substrate, a drain terminal and a source terminal formed on the semiconductor stacked body with a spacing therebetween, and a gate terminal formed between the drain terminal and the source terminal. Such a bidirectional switching element will be described referring to FIG. 10.

FIG. 10 is a cross-sectional view of the bidirectional switching element. The bidirectional switching element is a normally-off heterojunction FET composed of a nitride semiconductor formed on a semiconductor substrate. The bidirectional switching element is formed on a semiconductor stacked body 403. The semiconductor stacked body 403 is formed on a silicon substrate 401 with a buffer layer 402 interposed therebetween.

The buffer layer 402 includes aluminum nitride and gallium nitride alternately stacked on each other.

The semiconductor stacked body 403 includes an undoped gallium nitride layer 404 and an n-type aluminum gallium nitride layer 405 formed on the undoped gallium nitride layer 404. In the vicinity of the hetero-interface between the undoped gallium nitride layer 404 and the n-type aluminum gallium nitride layer 405, an FET channel region called two-dimensional electron gas and having a high carrier concentration is generated.

In addition, an ohmic electrode 406a for source terminal and an ohmic electrode 406b for drain terminal, in ohmic contact with the channel region for forming the source terminal and the drain terminal respectively, and an interconnect 410 are arranged on the semiconductor stacked body 403 as shown in FIG. 10.

A control layer 409 is provided on the n-type aluminum gallium nitride layer 405 at a position between the ohmic electrode 406a for source terminal and the ohmic electrode 406b for drain terminal. The control layer 409 is a p-type semiconductor layer for controlling the FET characteristics.

The gate electrode 408 is formed on the control layer 409 in ohmic contact therewith. Electrical signals provided to the gate electrode 408 control the current flowing between the drain terminal and the source terminal of the normally-off heterojunction FET, i.e., the bidirectional switching element.

A cover layer 407 is provided to cover the aforementioned structure.

As shown in FIG. 10, a distance between the ohmic electrode 406b for drain terminal and the gate electrode 408 is longer than a distance between the ohmic electrode 406a for source terminal and the gate electrode 408. This is because a higher withstand voltage is required between the drain terminal and the gate terminal than between the source terminal and the gate terminal.

The bidirectional switching element configured as FIG. 10 is called GaN transistor, which is a device with a high withstand voltage and capable of driving a large current, like an insulated gate bipolar transistor (IGBT). In addition, the GaN transistor possesses the ET characteristics and the inverse FET characteristics for bidirectionally supplying the current as shown in FIGS. 6A and 6B, without an offset voltage arising from the P-N junction in the I-V characteristics of the IGBT. Further, the GaN transistor has a quite small on-resistance Ron with respect to the chip area of the device. The GaN transistor further possesses the inverse conductive characteristics shown in FIG. 6C.

The bidirectional switching elements 208 and 209 with two gate terminals, for example shown in FIG. 5, each include two GaN transistors connected in series to each other in opposite directions. Such bidirectional switching element with two gate terminals will be described referring to FIG. 11.

FIG. 11 is a cross-sectional view of the bidirectional switching element with two gate terminals. The bidirectional switching element with two gate terminals is equivalent to two bidirectional switching elements connected to each other via the respective drain terminals, and these two drain terminals are unified. More specifically, the switching element with two gate terminals is composed of two normally-off heterojunction FETs shown in FIG. 10, formed of the nitride semiconductor on the semiconductor substrate, connected in series to each other via the respective channel regions of the FET drain terminal, which are unified. The switching element with two gate terminals is formed on a semiconductor stacked body 413. The semiconductor stacked body 413 is formed on a silicon substrate 411 with a buffer layer 412 interposed therebetween.

The buffer layer 412 and the semiconductor stacked body 413 have the same structure as that of the buffer layer 402 and the semiconductor stacked body 403 shown in FIG. 10. The semiconductor stacked body 413 includes an undoped gallium nitride layer 414, and an n-type aluminum gallium nitride layer 415 formed on the undoped gallium nitride layer 414. In the vicinity of the hetero-interface between the undoped gallium nitride layer 414 and the n-type aluminum gallium nitride layer 415, an FET channel region called two-dimensional electron gas and having a high carrier concentration is generated.

On the semiconductor stacked body 413, an ohmic electrode 416a for first source terminal and an ohmic electrode 416b for second source terminal, formed in ohmic contact with the channel region to respectively serve as a first source terminal corresponding to the first output terminal and a second source terminal corresponding to the second output terminal, and interconnects 420 respectively connected to the ohmic electrode 416a for first source terminal and the ohmic electrode 416b for second source terminal, are arranged as shown in FIG. 11.

The first control layer 419a and the second control layer 419b are formed on the n-type aluminum gallium nitride layer 415 in a region between the ohmic electrode 416a for first source terminal and the ohmic electrode 416b for second source terminal. The first control layer 419a and the second control layer 419b are p-type semiconductor layers for controlling the FET characteristics.

The gate electrode 408 is formed on the control layer 409 in ohmic contact therewith. Electrical signals provided to the gate electrode 408 control the current flowing between the drain terminal and the source terminal of the normally-off heterojunction FET, i.e., the bidirectional switching element.

The first gate electrode 418a and the second gate electrode are formed on the first control layer 419a and the second control layer 419b, respectively. The first control layer 419a and the first gate electrode 418a are in ohmic contact with each other. The second control layer 419b and the second gate electrode 418b are also in ohmic contact with each other.

A cover layer 417 is provided to cover the aforementioned structure.

As already described, the bidirectional switching element with two gate terminals is equivalent to two normally-off heterojunction FETs with a single gate terminal connected in series to each other via the respective channel regions of the drain terminal, which are unified. The normally-off heterojunction FET having the first gate electrode and the first source terminal controls the current flowing from the drain region shared between the other (second) heterojunction FET to the source terminal, according to the electrical signal provided to the first gate electrode 418a. Likewise, the second normally-off heterojunction FET having the second gate electrode and the second source terminal controls the current flowing from the drain region shared between the other (first) heterojunction FET to the source terminal, according to the electrical signal provided to the first gate electrode 418b.

As shown in FIG. 11, a distance between the first gate electrode 418a and the second gate electrode 418b is longer than a distance between the first gate electrode 418a and the ohmic electrode 416a for first source terminal, and between the second gate electrode 418b and the ohmic electrode 416b for second source terminal. This is because the region between the first gate electrode 418a and the second gate electrode 418b serves as the common drain region of the two heterojunction FETs connected in series. Such a configuration is preferable from the viewpoint of the withstand voltage.

As is apparent from FIG. 11, The bidirectional switching element with two gate terminals is composed of two heterojunction FETs connected in series sharing the drain region where a high withstand voltage is required. Accordingly, the configuration shown in FIG. 11 can be built in a reduced size compared with a configuration in which two switching elements each having an independent gate terminal are connected in series. In addition, the bidirectional switching element is operable in the four modes described referring to FIG. 8. Therefore, the voltage and the current at the terminals of the respective ends of the bidirectional switching element can be cut off, as the mode (d) shown in FIG. 8.

The bidirectional switching element with two gate terminals composed of the two GaN transistors provides a high withstand voltage and a small on-resistance, and is capable of driving a large current, as the GaN transistor.

Further, the bidirectional switching element including the two GaN transistors barely incurs a minor carrier accumulation effect, and a tail current is barely generated when the switching element turns off, unlike the IGBT and other Si-based semiconductor element. This point will be described through comparison between FIGS. 12A and 12B and FIGS. 4A and 4B.

FIGS. 12A and 12B are diagrams showing driving current waveforms produced by the switching operation of the bidirectional switching element 208 with two gate terminals and the bidirectional switching element 212, in the buck-boost PFC converter according to this embodiment.

FIG. 12A illustrates the current waveform produced by the switching operation of the switching element 208, in the buck conversion operation performed when the polarity of the commercial power source 1 is positive, described referring to FIG. 9A.

In the buck conversion operation, the switching elements 208 and 209 perform the PWM switching operation through synchronous rectification. In case that a minor carrier accumulation effect takes place in the switching element 209 when the switching element 208 turns on after the switching element 209 turns off, from the state shown in FIG. 9A in which the switching element 209 is on and the current is flowing as indicated by the broken lines B, the switching element 208 is made to drive the recovery current from the switching element 209. However, the bidirectional switching element with two gate terminals barely incurs the minor carrier accumulation effect. Accordingly, the peak current in the turn-on period in the waveform of the current Ids (208) of the switching element 208 shown in FIG. 12A is significantly smaller than the peak current in the turn-on period of the collector current Ice (8) of the switching element 8 shown in FIG. 4A.

In addition, since the bidirectional switching element with two gate terminals barely incurs the minor carrier accumulation effect, a tail current is barely generated when the switching element 208 turns off, as shown in FIG. 12A. This is also apparent through comparison with FIG. 4A.

The voltage Vds between the terminals of the switching element 208 in the buck conversion operation forms a waveform vertically inversed from the waveform VA shown in FIG. 12A, and the value obtained by time integration through the turn-on period shown in FIG. 12A, with respect to the product of the waveform and the current Ids (208) of the switching element 208, corresponds to the switching loss incurred when the switching element 208 turns on. As is apparent from FIG. 12A, the switching loss incurred when the switching element 208 turns on is small, because the recovery current shown in FIG. 4A is not involved. Likewise, the switching loss incurred when the switching element 208 turns off is also small, since the tail current is barely generated when the switching element 208 turns off.

FIG. 12B illustrates the current waveform produced by the switching operation of the switching element 212, in the boost conversion operation performed when the polarity of the commercial power source 1 is positive, described referring to FIG. 9C.

In the boost conversion operation, the switching elements 212 and 213 perform the PWM switching operation through synchronous rectification. In case that a minor carrier accumulation effect takes place in the switching element 213 when the switching element 212 turns on after the switching element 213 turns off, from the state shown in FIG. 9C in which the switching element 213 is on and the current is flowing as indicated by the broken lines B, the switching element 212 is made to drive the recovery current from the switching element 213. However, since the bidirectional switching element barely incurs the minor carrier accumulation effect, the peak current in the turn-on period in the waveform of the current Ids (212) of the switching element 212 shown in FIG. 12B is significantly smaller than the peak current in the turn-on period of the collector current Ice (12) of the switching element 12 shown in FIG. 4B.

In addition, since the bidirectional switching element barely incurs the minor carrier accumulation effect, a tail current is barely generated when the switching element 212 turns off, as shown in FIG. 12B. This is also apparent through comparison with FIG. 4B.

The voltage Vds between the terminals of the switching element 212 in the boost conversion operation forms a waveform vertically inversed from the waveform VB shown in FIG. 12B, and the value obtained by time integration through the turn-on period shown in FIG. 12B, with respect to the product of the waveform and the current Ids (212) of the switching element 212, corresponds to the switching loss incurred when the switching element 212 turns on. As is apparent from FIG. 12B, the switching loss incurred when the switching element 212 turns on is small, because the recovery current shown in FIG. 4B is not involved. Likewise, the switching loss incurred when the switching element 212 turns off is also small, since the tail current is barely generated when the switching element 212 turns off.

Regarding the case where the polarity of the commercial power source 1 is negative, the buck conversion operation remains the same except that the switching element 208 is replaced with the switching element 209, and the boost conversion operation remains the same, in which the switching element 212 is unchanged. Therefore, the description of the advantage of the reduction in switching loss with respect to the switching element will not be repeated.

As described above, the buck-boost PFC converter including the AC/DC converter unit 245 according to this embodiment barely suffers a switching loss originating from a recovery current from a diode formed of a Si-based semiconductor element, when performing the PWM switching operation. Therefore, the buck-boost PFC converter does not incur a significant increase in power consumption despite increasing the switching frequency. Consequently, the buck-boost PFC converter allows the boost induction coil to be made smaller by increasing the switching frequency, thus reducing the size of the reactor.

In addition, the buck-boost PFC converter according to this embodiment does not include a diode, and can therefore be exempted from power consumption due to a voltage drop of the forward voltage VF in the rectifier diode bridge and the diode for return current.

Thus, this embodiment provides a high-efficiency buck-boost PFC converter that provides at least three advantageous effects, namely the reduction in power consumption by minimizing the switching loss, reduction in power consumption caused by the forward voltage VF of the diode, and reduction in conduction loss because of the smaller on-resistance of the GaN transistor.

Furthermore, as is apparent through comparison between the AC/DC converter unit 245 shown in FIG. 5 and the rectifier diode bridge 4 and the converter 5 in the comparative example shown in FIG. 1, the buck-boost PFC converter according to this embodiment includes a fewer number of power semiconductor elements, by the difference corresponding to the buck chopper semiconductor switching element 8 and the diode 9 for return current in the buck operation employed in the comparative example.

In addition, the improved efficiency and the reduction in the number of power semiconductor elements allow reduction in size of heat dissipating components such as a heat sink. With such an advantage added to the mentioned reduction in size of the reactor, the buck-boost PFC converter can be made even smaller in size.

Here, FIG. 13 illustrates a variation of the first embodiment, in which the location of the reactor 11 is different. In an AC/DC converter unit 246 shown in FIG. 13, the reactor 11 and the current sensor 10 for PFC control are located between the source terminal of the bidirectional switching element 207 and the source terminal of the bidirectional switching element 212, instead of between the node of the bidirectional switching elements with two gate terminals 208 and 209 and the node of the bidirectional switching elements 212 and 213.

In other words, the reactor 11 is connected between the first node and the third node (GND).

The switching element 212 (seventh switching element) has the source terminal connected to the third node, and the drain terminal connected to the second node. The switching element 213 (eighth switching element) has the source terminal connected to the second node, and the drain terminal connected to the output terminal T3.

With such a configuration also, the function of the switching elements 208 and 209 to cut off the current to the reactor 11 in the buck conversion operation, and the function of the switching element 212 to cut off the current to the reactor 11 in the boost conversion operation are equally performed as with the location of the reactor 11 shown in FIG. 5. Therefore, although the switching voltage waveform may differ at some nodes in the circuit, the AC/DC conversion operation to generate the DC voltage Vdc from the AC power source of the commercial power source 1 is equally performed.

### Second Embodiment

FIG. 14 is a circuit diagram showing a configuration of a buck-boost PFC converter according to a second embodiment. The buck-boost PFC converter according to this embodiment will be described hereunder referring to FIG. 14.

The buck-boost PFC converter shown in FIG. 14 includes an AC/DC converter unit 345 and a control unit 300.

The AC/DC converter unit 345 includes switching elements 304 to 309, 312, and 313.

The switching element 306 (first switching element) has the source terminal connected to a first node N1 (GND), and the drain terminal connected to the first input terminal T1.

The switching element 304 (second switching element) has the source terminal connected to the first input terminal T1, and the drain terminal connected to the second node.

The switching element 307 (third switching element) has the source terminal connected to the first node N1, and the drain terminal connected to the second input terminal T2.

The switching element 305 (fourth switching element) has the source terminal connected to the second input terminal T2, and the drain terminal connected to a second node N2.

The switching element 309 (fifth switching element) has the source terminal connected to the first node N1, and the drain terminal connected to a third node N3.

The switching element 308 has the source terminal connected to the third node N3, and the drain terminal connected to the second node N2.

The switching elements 304 to 309 correspond to the first switching element group in the present invention. The first switching element group is employed to perform the full-wave rectification of the AC power source inputted to the first input terminal T1 and T2 thereby generating the full-wave rectified signal, and to perform the buck operation.

The reactor 11 is connected between the third node N3 and a fourth node N4.

The switching element 312 (seventh switching element) has the source terminal connected to the first node N1, and the drain terminal connected to the fourth node N4.

The switching element 313 (eighth switching element) has the source terminal connected to the fourth node N4, and the drain terminal connected to the output terminal T3.

The switching elements 312 and 313 correspond to the second switching element group in the present invention. The second switching element group is connected to the output terminal T3, and employed to perform the boost operation.

The control unit 300 has generally the same functions as those of the control unit 200 shown in FIG. 5. Only a part of eight output signals respectively provided to the gate terminal of the eight bidirectional switching elements from a drive logic circuit (not shown in FIG. 14) in the control unit 300 is different from the eight corresponding output signals from the drive logic circuit 108a shown in FIG. 5. The difference is obviously understood upon comparison between FIGS. 15A to 15D and FIGS. 9A to 9D illustrating the operation of the buck-boost PFC converter according to the first embodiment. Therefore, verbal description will not be given. In addition, the PFC control operation of the control unit 300 is also similar to the operation according to the first embodiment, and therefore detailed description will not be repeated.

Specifically, in the buck operation the control unit 300 turns off the switching element 312 and turns on the switching element 313. The control unit 300 also performs the same switching control on the switching elements 308 and 309.

In the boost operation, the control unit 300 turns off the switching element 309 and turns on the switching element 308. The control unit 300 also performs the same switching control on the switching elements 312 and 313.

Further, the control unit 300 turns off the switching elements 305 and 306 and turns on the switching element 304 and 307, when the polarity of the commercial power source 1 is positive. When the polarity of the commercial power source 1 is negative, the control unit 300 turns off the switching elements 304 and 307 and turns on the switching element 305 and 306.

FIGS. 15A to 15D are circuit diagrams for explaining the buck conversion operation and the boost conversion operation performed by the AC/DC converter unit 345 when the polarity of the commercial power source 1 is positive or negative.

FIG. 15A is a circuit diagram for explaining the buck conversion operation performed when the polarity of the commercial power source 1 is positive.

As shown in FIG. 15A, the control unit 300 provides the signal PWM to the switching element 308, and the signal PWMX to the switching element 309. The control unit 300 also provides the High-level signal to the gate terminal of the switching elements 304, 307, and 313, and provides the Low-level signal to the gate terminal of the switching elements 305, 306, and 312.

When the signal PWM is High-level and the signal PWMX is Low-level in FIG. 15A, the switching element 308 is in the conducting mode shown in FIG. 7A and the switching element 309 is in the inverse conducting mode shown in FIG. 7B. In this case, the current flows from the positive output terminal of the commercial power source 1 to the negative output terminal thereof, through the switching element 304, the switching element 308, the reactor 11, the switching element 313, the smoothing capacitor 14, and the switching element 307 in this order, as indicated by broken lines A in FIG. 15A. With the current flowing from the commercial power source 1 to the reactor 11 as indicated by the broken lines A, magnetic energy is stored in the reactor 11.

In contrast, when the signal PWM is Low-level and the signal PWMX is High-level, the switching element 309 is in the conducting mode and the switching element 308 is in the inverse conducting mode. In this case the current from the commercial power source 1 to the reactor 11 is cut off. Broken lines B indicate the current flow under such a setting. In this case the magnetic energy is not stored in the reactor 11 with the current from the commercial power source 1. Conversely, the reactor 11 starts to emit the magnetic energy and the current flows as indicated by broken lines B. Thus, the current flows from the reactor 11 through the switching element 313, the smoothing capacitor 14, and the switching element 309 in this order, and returns to the reactor 11. With such a current flow the magnetic energy is discharged from the reactor 11.

The control unit 300 normally performs the control such that the magnetic energy stored in the reactor 11 and the magnetic energy discharged therefrom becomes equal. By such a control the buck conversion operation is realized, in which the DC voltage Vdc is controlled to a constant value lower than the AC amplitude voltage of the commercial power source 1 determined by the target voltage VdcIN, even when the voltage of the commercial power source 1 is higher than the DC voltage Vdc.

However, the magnetic energy may not be immediately stored in the reactor 11 with the current flowing as indicated by the broken lines A though the magnetic energy in the reactor 11 is completely discharged, for example because of a delay of control response of the control unit 300. In such a case, the current flows in the reactor 11 in the direction opposite to the current indicated by the broken lines B. Accordingly, the smoothing capacitor 14 shifts to a discharge mode from a charge mode. To prevent such a phenomenon, the control unit 300 outputs the synchronous rectification signal PWMX as a Low-level signal when the output current Ir from the commercial power source 1 detected by the current sensor 10 is approximately zero. This may be expressed as shifting the signal PWMX to Low-level when the current in the reactor 11 drops to approximately zero. When the signal PWMX is Low-level in FIG. 15A, the switching element 309 assumes the inverse conducting mode shown in FIG. 7B. Thus, the discharge from the smoothing capacitor 14 because of the current flowing opposite to the broken lines B in FIG. 15A can be prevented.

As described above, the control unit 300 allows the AC/DC converter unit 345 to stably operate as a buck converter.

FIG. 15B is a circuit diagram for explaining the buck conversion operation performed when the polarity of the commercial power source 1 is negative.

As shown in FIG. 15B, the control unit 300 provides the signal PWM to the switching element 308, and the signal PWMX to the switching element 309. The control unit 300 also provides the High-level signal or Low-level signal to the gate terminal of the switching elements 304, 305, 306, 307, 312, and 313 as shown in FIG. 15B.

Broken lines A in FIG. 15B are different from the broken lines A in FIG. 15A only in that the current flow in the switching element 304, 305, 306, and 307 is modified for adjustment to the polarity difference of the commercial power source 1, which is the AC power source. Therefore, the description of the buck conversion operation will not be repeated.

FIG. 15C is a circuit diagram for explaining the boost conversion operation performed when the polarity of the commercial power source 1 is positive. As shown in FIG. 15C, the control unit 300 provides the signal PWM to the switching element 312, and the signal PWMX to the switching element 313. The control unit 300 also provides the High-level signal or Low-level signal to the gate terminal of the switching elements 304, 305, 306, 307, 308, and 309, as shown in FIG. 15C.

Broken lines A in FIG. 15C indicate a current flow produced when the signal PWM is High-level and the signal PWMX is Low-level. In this case, the switching element 312 is in the conducting mode and the switching element 313 is in the inverse conducting mode, as described referring to FIGS. 7A and 7B. Accordingly, the current indicated by the broken lines A flows from the positive output terminal of the commercial power source 1 to the negative output terminal thereof, through the switching element 304, the switching element 308, the reactor 11, the switching element 312 and the switching element 307 in this order. With the current flowing as indicated by the broken lines A, magnetic energy is stored in the reactor 11.

When the signal PWM is Low-level and the signal PWMX is High-level, the switching element 313 is in the conducting mode and the switching element 312 is in the inverse conducting mode. Broken lines B indicate the current flow under such a setting. The current indicated by the broken lines B flows from the positive output terminal of the commercial power source 1 through the switching element 304, the switching element 308, the reactor 11, the switching element 313, the smoothing capacitor 14, and the switching element 307in this order, to the negative output terminal of the commercial power source 1. With the current flowing as indicated by the broken lines B, the magnetic energy is discharged from the reactor 11 and the smoothing capacitor 14 is loaded with electric charge. Thus, the DC voltage Vdc can be boosted to a voltage higher than the AC amplitude voltage of the commercial power source 1.

The control unit 300 normally performs the control such that the magnetic energy stored in the reactor 11 and the magnetic energy discharged therefrom becomes equal. By such a control the boost conversion operation is realized, in which the DC voltage Vdc is controlled to a constant value higher than the AC amplitude voltage of the commercial power source 1 determined by the target voltage VdcIN.

However, the magnetic energy may not be immediately stored in the reactor 11 with the current flowing as indicated by the broken lines A though the magnetic energy in the reactor 11 is completely discharged, for example because a load of the DC voltage Vdc is small. In such a case, the current flows in the reactor 11 in the direction opposite to the current indicated by the broken lines B. Accordingly, the smoothing capacitor 14 shifts to a discharge mode from a charge mode. To prevent such a phenomenon, the control unit 300 outputs the synchronous rectification signal PWMX as a Low-level signal when the output current Ir from the commercial power source 1 detected by the current sensor 10 is approximately zero. This may be expressed as shifting the signal PWMX to Low-level when the current in the reactor 11 drops to approximately zero. When the signal PWMX is Low-level in FIG. 15C, the switching element 313 assumes the inverse conducting mode shown in FIG. 7B. Thus, the discharge from the smoothing capacitor 14 because of the current flowing opposite to the broken lines B in FIG. 15C can be prevented.

As described above, the control unit 300 allows the AC/DC converter unit 345 to stably operate as a boost converter.

FIG. 15D is a circuit diagram for explaining the boost conversion operation performed when the polarity of the commercial power source 1 is negative.

As shown in FIG. 15D, the control unit 300 provides the signal PWM to the switching element 312, and the signal PWMX to the switching element 313. The control unit 300 also provides the High-level signal or Low-level signal to the gate terminal of the switching elements 304, 305, 306, 307, 308, and 309 as shown in FIG. 15D.

Broken lines A in FIG. 15D are different from the broken lines A in FIG. 15C only in that the current flow in the switching element 304, 305, 306, and 307 is modified for adjustment to the polarity difference of the commercial power source 1, which is the AC power source. Therefore, the description of the boost conversion operation will not be repeated.

The buck-boost PFC converter shown in FIG. 14 includes neither the diode for receiving the return current when the reactor 11 emits the magnetic energy nor the rectifier diode bridge, like the buck-boost PFC converter according to the first embodiment.

In addition, the bidirectional switching elements in the AC/DC converter unit 345 according to this embodiment are employed on the premise that those switching elements are free from minor carrier accumulation effect, and hence suppress a recovery current and a tail current generated when the switching element turns off, as in the first embodiment. Further, the GaN transistors employed in the first embodiment are adopted to constitute such bidirectional switching elements. Therefore, the buck-boost PFC converter that includes the AC/DC converter unit 345 according to this embodiment barely incurs the switching loss when performing the PWM switching operation. In addition, the bidirectional switching elements have a low on-resistance, and therefore conduction loss can also be reduced.

As described above, the buck-boost PFC converter including the AC/DC converter unit 345 according to this embodiment barely suffers a switching loss originating from a recovery current from a diode formed of a Si-based semiconductor element, when performing the PWM switching operation. Therefore, the buck-boost PFC converter does not incur a significant increase in power consumption despite increasing the switching frequency. Consequently, the buck-boost PFC converter allows the boost induction coil to be made smaller by increasing the switching frequency, thus reducing the size of the reactor.

In addition, the buck-boost PFC converter according to this embodiment does not include a diode, and can therefore be exempted from power consumption due to a voltage drop of the forward voltage VF in the rectifier diode bridge and the diode for return current. Thus, this embodiment provides a high-efficiency buck-boost PFC converter that provides at least three advantageous effects, namely the reduction in power consumption by minimizing the switching loss, reduction in power consumption caused by the forward voltage VF of the diode, and reduction in conduction loss because of the smaller on-resistance of the GaN transistor.

Further, the improved efficiency allows reduction in size of heat dissipating components such as a heat sink. With such an advantage added to the mentioned reduction in size of the reactor, the buck-boost PFC converter can be made even smaller in size.

Here, FIG. 16 illustrates a variation of the second embodiment, in which the location of the reactor 11 is different. In an AC/DC converter unit 346 shown in FIG. 16, the reactor 11 and the current sensor 10 for PFC control are located between the source terminal of the bidirectional switching element 309 and the source terminal of the bidirectional switching element 312, instead of between the node of the bidirectional switching elements 308 and 309 and the node of the bidirectional switching elements 312 and 313.

In other words, the reactor 11 is connected between the first node N1 and the fourth node N4 (GND). The switching element 312 (seventh switching element) has the source terminal connected to the fourth node N4, and the drain terminal connected to the third node N3. The switching element 313 (eighth switching element) has the source terminal connected to the third node N3, and the drain terminal connected to the output terminal T3.

With such a configuration also, the function of the switching elements 308 to cut off the current to the reactor 11 in the buck conversion operation, and the function of the switching element 312 to cut off the current to the reactor 11 in the boost conversion operation are equally performed as with the location of the reactor 11 shown in FIG. 14. Therefore, although the switching voltage waveform may differ at some nodes in the circuit, the AC/DC conversion operation to generate the DC voltage Vdc from the AC power source of the commercial power source 1 is equally performed.

As described thus far with reference to the drawings, the switching elements employed in the buck-boost PFC converter according to the first embodiment each include a gate terminal that controls the current, and a drain terminal and a source terminal for receiving and outputting the current. The switching elements each have FET characteristics and inverse FET characteristics for supplying the current from the drain terminal to the source terminal or from the source terminal to the drain terminal depending on the polarity of a voltage difference between the drain terminal and the source terminal, when the gate-source voltage corresponding to a difference of the voltage of the gate terminal from the voltage of the source terminal is higher than a threshold voltage. The switching elements also have inverse conductive characteristics for cutting off the current from the drain terminal to the source terminal when the gate-source voltage is lower than or equal to the threshold voltage, and supplying the current from the source terminal to the drain terminal when a difference of the voltage of the gate terminal from the voltage of the drain terminal is higher than the threshold voltage.

The buck-boost PFC converter according to the first embodiment includes the AC/DC converter unit 245 or 246 shown in FIG. 5 or FIG. 13, which includes the foregoing switching elements and can also serve as a rectifier bridge, or a similar AC/DC converter unit capable of controlling the current for the reactor 11, like the AC/DC converter unit 245 or 246.

The aforementioned switching elements are free from a minor carrier accumulation effect, and hence suppress a recovery current and a tail current generated when the switching elements turn off.

The bidirectional switching element includes a semiconductor stacked body composed of a nitride semiconductor formed on a semiconductor substrate, a drain terminal and a source terminal formed on the semiconductor stacked body with a spacing therebetween, and a gate terminal formed between the drain terminal and the source terminal. The bidirectional switching element is generally known as a heterojunction FET that employs a gallium nitride semiconductor, which is called GaN transistor.

The GaN transistor is the bidirectional switching element having the FET characteristics and the inverse FET characteristics exhibited when the gate-source voltage is higher than the threshold voltage, as well as the inverse conductive characteristics exhibited when the gate-source voltage is lower than or equal to the threshold voltage, the bidirectional switching element having a high withstand voltage characteristic, and also the FET transistor having a very low on-resistance in the FET characteristics and the inverse FET characteristics. In addition, the GaN transistor barely incurs a minor carrier accumulation effect unlike a Si-based semiconductor element, and hence barely incurs an increase in switching loss originating from the recovery current.

Thus, the AC/DC converter unit 245 or 246 does not include the diode which is the cause of the drawback mentioned earlier, but includes the bidirectional switching elements instead. Therefore, the switching loss that arises when the switching element drives the recovery current from the diode can be eliminated. As a result, power consumption by the buck-boost PFC converter for the PWM switching operation can be reduced, despite increasing the PWM switching frequency.

In addition, the buck-boost PFC converter does not include the diode, and can therefore be exempted from power consumption due to a voltage drop of the forward voltage VF in the rectifier diode bridge and the diode for return current. With these reduction effects of the power consumption, the buck-boost PFC converter can achieve higher operation efficiency.

In the AC/DC converter unit 245, 246, further, the first switching element group including two bidirectional switching elements 206, 207 and two bidirectional switching elements 208, 209 each having two gate terminals serves as the substitute for the buck chopper semiconductor switching element 8 and the diode 9 for the return current in the comparative example. Accordingly, the heat dissipating components such as a heat sink can be made smaller in size, to the extent corresponding to the exclusion of the semiconductor switching element 8 and the diode 9 serving as the power semiconductor element. With such an advantage added to the mentioned reduction in size of the reactor by increasing the PWM switching frequency, the buck-boost PFC converter can be made even smaller in size.

The bidirectional switching elements employed in the buck-boost PFC converter according to the second embodiment each include a gate terminal that controls the current, and a drain terminal and a source terminal for receiving and outputting the current, as well as the FET characteristics, the inverse FET characteristics, and also the inverse conductive characteristics.

The buck-boost PFC converter according to the second embodiment includes the AC/DC converter unit 345 or 346 shown in FIG. 14 or FIG. 16, which includes the foregoing switching elements and can also serve as a rectifier bridge, or a similar AC/DC converter unit capable of controlling the current, like the AC/DC converter unit 345 or 346.

The aforementioned switching elements are free from a minor carrier accumulation effect, and hence suppress a recovery current and a tail current generated when the switching elements turn off.

The bidirectional switching element may be the aforementioned GaN transistor known as a heterojunction FET that employs a gallium nitride semiconductor, including a semiconductor stacked body composed of a nitride semiconductor formed on a semiconductor substrate, a drain terminal and a source terminal formed on the semiconductor stacked body with a spacing therebetween, and a gate terminal formed between the drain terminal and the source terminal.

The GaN transistor constitutes the aforementioned bidirectional switching element, and barely incurs a minor carrier accumulation effect unlike a Si-based semiconductor element, and hence barely incurs an increase in switching loss originating from the recovery current.

Thus, the AC/DC converter unit 345 or 346 does not include the diode which is the cause of the drawback mentioned earlier, but includes the bidirectional switching elements instead. Therefore, the switching loss that arises when the switching element drives the recovery current from the diode can be eliminated. As a result, power consumption by the buck-boost PFC converter for the PWM switching operation can be reduced, despite increasing the PWM switching frequency.

In addition, the buck-boost PFC converter does not include the diode, and can therefore be exempted from power consumption due to a voltage drop of the forward voltage VF in the rectifier diode bridge and the diode for return current. With these reduction effects of the power consumption, the buck-boost PFC converter can achieve higher operation efficiency.

Further, the inductor in the reactor can be made smaller by increasing the PWM switching frequency, and therefore the buck-boost PFC converter having a smaller reactor can be obtained.

Still further, the buck-boost AC/DC converter according to the foregoing embodiments may be employed in an inverter that drives a motor, in which case the switching loss of the inverter as well as the core loss of the motor can be reduced, and thus a high power factor and high efficiency inverter unit can be obtained.

Although the embodiments of the buck-boost PFC converter have been described above, it is to be understood that the present invention is in no way limited to those embodiments.

The functional units included in the buck-boost PFC converter according to the foregoing embodiments are typically realized as an LSI which is a type of integrated circuit. The functional units may be individually implemented in separate chips, or a single chip may include a part or whole of the functional units.

The integration may be achieved by an exclusive circuit or a general-use processor, instead of employing the LSI. After manufacturing the LSI, a field programmable gate array (FPGA), or a reconfigurable processor that accepts reconfiguration of connection or setting of circuit cells inside the LSI may be employed.

A part of the functions of the buck-boost PFC converter according to the foregoing embodiments may be realized by a processor such as a CPU that executes a program.

The present invention may be the foregoing program, or a non-transitory computer-readable recording medium containing that program. Naturally, such a program can be distributed through a communication medium such as the internet.

Although corner portions and sides of the constituents are illustrated in linear shapes in the drawings, the corner portions and the sides formed in a roundish shape as a design are also included in the present invention.

At least a part of the functions or configurations of the buck-boost PFC converter according to the foregoing embodiments and the variations thereof may be combined.

The numerical values cited in the foregoing description are merely for specifically explaining the present invention, and in no way for limiting the present invention. The logical level expressed by High/Low and the switching status expressed by on /off are merely for specifically explaining the present invention, and equivalent effects may be attained with different combinations of the logical level or switching state cited above. Further, the foregoing configurations of the logic circuit are merely for specifically explaining the present invention, and equivalent input/output performance may be realized with logic circuits of different configurations. The materials of the constituents cited above are merely for specifically explaining the present invention, and different materials may be adopted in the present invention. Still further, the connection arrangements among the constituents are merely for specifically explaining the present invention, and the functions of the present invention may be realized with different connection arrangements.

The circuit configurations of the accompanying circuit diagrams are merely exemplary, and different circuit configurations may be adopted in the present invention. In other words, circuits that can realize the distinctive functions of the present invention are duly included in the scope of the present invention. For example, a configuration in which a switching element (transistor), a resistance element, a capacitance element, or the like is connected to another element in series or in parallel is included in the scope of the present invention. Further, the expression "connected" in the foregoing description refers not only to a state where two terminals (nodes) are directly connected to each other, but also to a state where those two terminals (nodes) are connected via another element, provided that the equivalent function can be realized.

As a matter of course, variations of the foregoing embodiments reached by those skilled in the art are included in the present invention, unless those variations deviate from the scope and spirits of the present invention.

### [Industrial Applicability]

The present invention is applicable to a buck-boost AC/DC converter, in particular to a high power factor and high efficiency buck-boost PFC converter. The present invention is also advantageously applicable to an inverter that drives a motor by using a buck-boost PFC converter.

### [Reference Signs List]

1 Commercial power source
6, 7, 15, 16 Voltage dividing resistor
8, 12 Switching element
9, 13 Diode
10 Current sensor
11 Reactor
14 Smoothing capacitor
18 Inverter
31 Brushless motor
42 Power source
41 Pre-drive circuit
43 Control circuit
100, 200, 300 Control unit
101 First error amplifier
102 Multiplication circuit
103 Amplifier
104 Second error amplifier
105 Triangular wave generation circuit
106 PWM comparator
107 First comparator
108, 108a Drive logic circuit
116 Differential amplifier
117 Absolute value circuit
118 Second comparator
206, 207, 208, 208a, 208b, 209, 209a, 209b, 212, 213, 304, 305, 306, 307, 308, 309, 312, 313 Switching element
245, 246, 345, 346 AC/DC converter unit
401, 411 Silicon substrate
402, 412 Buffer layer
403, 413 Semiconductor stacked body
404, 414 Undoped gallium nitride layer
405, 415 n-type aluminum gallium nitride layer
406a Ohmic electrode for source terminal
406b Ohmic electrode for drain terminal
407, 417 Cover layer
408 Gate electrode
409 Control layer
410, 420 Interconnect
416a Ohmic electrode for first source terminal
416b Ohmic electrode for second source terminal
418a First gate electrode
418b Second gate electrode
419a First control layer
419b Second control layer
D1, D2, D3, D4 Diode
DR Direction signal
Ir Output current
PN Polarity signal
PWM Signal
PWMX Signal
V0 AC voltage signal
V1 Full-wave rectification signal
Vdc DC voltage
VdcIN Target voltage
VE1 Error signal
VE2 Current control signal
VE3 PFC error signal
VIR Voltage signal
Vr Full-wave rectified voltage
Vsaw Triangular wave signal

## Claims

1. A buck-boost AC/DC converter that converts an AC signal to a DC signal and maintains a voltage of the DC signal at a constant value, the buck-boost AC/DC converter comprising:
a first input terminal and a second input terminal to which the AC signal is inputted;
an output terminal from which the DC signal is outputted;
a first switching element group that generates a full-wave rectified signal by full-wave rectification of the AC signal and performs a buck operation, the first switching element group being connected to the first and second input terminals;
a second switching element group that performs a boost operation, the second switching element group being connected to the output terminal;
a reactor connected between the first switching element group and the second switching element group;
a smoothing capacitor connected to the output terminal;
a control unit configured to selectively cause one of first and second switching element groups to perform one of the buck operation and the boost operation based on pulse width modulation (PWM), to thereby maintain the voltage of the DC signal at a constant value,
wherein each of switching elements included in the first and second switching element groups includes a gate terminal, a drain terminal, and a source terminal, and:
allows a current to flow from the drain terminal to the source terminal or from the source terminal to the drain terminal depending on a polarity of a voltage difference between the drain terminal and the source terminal, when a gate-source voltage being a voltage of the gate terminal with respect to a voltage of the source terminal is higher than a threshold voltage;
cuts off the current from the drain terminal to the source terminal when the gate-source voltage is lower than or equal to the threshold voltage; and
allows the current to flow from the source terminal to the drain terminal when the gate-source voltage is lower than or equal to the threshold voltage, and a voltage of the gate terminal with respect to a voltage of the drain terminal is higher than the threshold voltage, and
the control unit is further configured to cause the first switching element group to perform the full-wave rectification, by changing the gate-source voltage to be supplied to the switching element included in the first switching element group depending on a polarity of the AC signal.

2. The buck-boost AC/DC converter according to Claim 1,
wherein the first switching element group includes:
a first switching element having a drain terminal connected to the first input terminal and a source terminal connected to a first node;
a second switching element and a third switching element connected between the first input terminal and a second node, and having respective source terminals or respective drain terminals connected in series to each other;
a fourth switching element having a drain terminal connected to the second input terminal and a source terminal connected to the first node; and
a fifth switching element and a sixth switching element connected between the second input terminal and the second node, and having respective source terminals or respective drain terminals connected in series to each other.

3. The buck-boost AC/DC converter according to Claim 2,
wherein the respective drain terminals of the second switching element and the third switching element are connected to each other, and both of the drain terminals are unified, and
the respective drain terminals of the fifth switching element and the sixth switching element are connected to each other, and both of the drain terminals are unified.

4. The buck-boost AC/DC converter according to Claim 2 or 3,
wherein the reactor is connected between the second node and a third node, and
the second switching element group includes:
a seventh switching element having a source terminal connected to the first node and a drain terminal connected to the third node; and
an eighth switching element having a source terminal connected to the third node and a drain terminal connected to the output terminal.

5. The buck-boost AC/DC converter according to Claim 2 or 3,
wherein the reactor is connected between the first node and a third node, and
the second switching element group includes:
a seventh switching element having a source terminal connected to the third node and a drain terminal connected to the second node; and
an eighth switching element having a source terminal connected to the second node and a drain terminal connected to the output terminal.

6. The buck-boost AC/DC converter according to Claim 4 or 5,
wherein, in the buck operation, the control unit is configured to:
perform a switching control including (i) making the gate-source voltage of one of two switching elements higher than the threshold voltage and making the gate-source voltage of the other lower than or equal to the threshold voltage, and (ii) sequentially changing the switching element the gate-source voltage of which is to be made higher than the threshold voltage, the two switching elements being one of the second and third switching elements and one of the fifth and sixth switching elements; and
make the gate-source voltage of the other of the second and third switching elements, the other of the fifth and sixth switching elements, and the eighth switching element higher than the threshold voltage, and make the gate-source voltage of the seventh switching element lower than or equal to the threshold voltage.

7. The buck-boost AC/DC converter according to Claim 6,
wherein the source terminal of the second switching element is connected to the first input terminal,
the source terminal of the third switching element is connected to the second node, and
the control unit is configured to:
make the gate-source voltage of the first switching element lower than or equal to the threshold voltage and make the gate-source voltage of the second, the fourth, and the sixth switching element higher than the threshold voltage, and perform the switching control on the third and fifth switching elements, when a voltage of the first input terminal is positive and a voltage of the second input terminal is negative; and
make the gate-source voltage of the fourth switching element lower than or equal to the threshold voltage and make the gate-source voltage of the first, the third, and the fifth switching element higher than the threshold voltage, and perform the switching control on the second and sixth switching elements, when a voltage of the first input terminal is negative and a voltage of the second input terminal is positive.

8. The buck-boost AC/DC converter according to any one of Claims 4 to 7,
wherein, in the boost operation, the control unit is configured to:
perform a switching control including (i) making the gate-source voltage of one of the seventh and eighth switching elements higher than the threshold voltage, (ii) making the gate-source voltage of the other lower than or equal to the threshold voltage, and (iii) sequentially changing the switching element the gate-source voltage of which is to be made higher than the threshold voltage;
make the gate-source voltage of the first, the fifth, and the sixth switching element lower than or equal to the threshold voltage and make the gate-source voltage of the second, the third, and the fourth switching element higher than the threshold voltage, when the voltage of the first input terminal is positive and the voltage of the second input terminal is negative; and
make the gate-source voltage of the second, the third, and the fourth switching element lower than or equal to the threshold voltage and make the gate-source voltage of the first, the fifth, and the sixth switching element higher than the threshold voltage, when the voltage of the first input terminal is negative and the voltage of the second input terminal is positive.

9. The buck-boost AC/DC converter according to Claim 1,
wherein the first switching element group includes:
a first switching element having a source terminal connected to a first node and a drain terminal connected to the first input terminal;
a second switching element having a source terminal connected to the first input terminal and a drain terminal connected to a second node;
a third switching element having a source terminal connected to the first node and a drain terminal connected to the second input terminal;
a fourth switching element having a source terminal connected to the second input terminal and a drain terminal connected to the second node;
a fifth switching element having a source terminal connected to the first node and a drain terminal connected to a third node; and
a sixth switching element having a source terminal connected to the third node and a drain terminal connected to the second node.

10. The buck-boost AC/DC converter according to Claim 9,
wherein the reactor is connected between the third node and a fourth node, and
the second switching element group includes:
a seventh switching element having a source terminal connected to the first node and a drain terminal connected to the fourth node; and
an eighth switching element having a source terminal connected to the fourth node and a drain terminal connected to the output terminal.

11. The buck-boost AC/DC converter according to Claim 9,
wherein the reactor is connected between the first node and a fourth node, and
the second switching element group includes:
a seventh switching element having a source terminal connected to the fourth node and a drain terminal connected to the third node; and
an eighth switching element having a source terminal connected to the third node and a drain terminal connected to the output terminal.

12. The buck-boost AC/DC converter according to Claim 10 or 11,
wherein the control unit is configured to:
in the buck operation,
make the gate-source voltage of the seventh switching element lower than or equal to the threshold voltage;
make the gate-source voltage of the eighth switching element higher than the threshold voltage; and
perform a switching control including (i) making the gate-source voltage of one of two switching elements higher than the threshold voltage and making the gate-source voltage of the other lower than or equal to the threshold voltage, and (ii) sequentially changing the switching element the gate-source voltage of which is to be made higher than the threshold voltage, the two switching elements being the fifth and sixth switching elements; and
in the boost operation,
make the gate-source voltage of the fifth switching element lower than or equal to the threshold voltage;
make the gate-source voltage of the sixth switching element higher than the threshold voltage; and
perform the switching control on the seventh and eighth switching elements.

13. The buck-boost AC/DC converter according to any one of Claims 10 to 12,
wherein the control unit is configured to:
make the gate-source voltage of the first and fourth switching elements lower than or equal to the threshold voltage and make the gate-source voltage of the second and the third switching element higher than the threshold voltage, when a voltage of the first input terminal is positive and a voltage of the second input terminal is negative; and
make the gate-source voltage of the second and the third switching element lower than or equal to the threshold voltage and make the gate-source voltage of the first and fourth switching elements higher than the threshold voltage, when the voltage of the first input terminal is negative and the voltage of the second input terminal is positive.

14. The buck-boost AC/DC converter according to any one of Claims 1 to 13,
wherein the switching element included in the first and second switching element groups is a heterojunction field effect transistor including a gallium nitride semiconductor, and includes:
a semiconductor stacked body including a nitride semiconductor formed on a semiconductor substrate;
a drain electrode and a source electrode formed on the semiconductor stacked body with a spacing therebetween; and
a gate electrode formed between the drain electrode and the source electrode.
